# EUROPÄISCHE PATENTSCHRIFT

(11) **EP 3 820 762 B1**
(45) Veröffentlichungstag und Bekanntmachung des Hinweises auf die Patenterteilung: **16.11.2022**
(21) Anmeldenummer: 19755525.3
(22) Anmeldetag: 09.07.2019
(51) Int. Cl.: B62D 1/181, F16C 33/58, F16C 25/08

(54) **VERSTELLANTRIEB FÜR EINE LENKSÄULE, MOTORISCH VERSTELLBARE LENKSÄULE FÜR EIN KRAFTFAHRZEUG, UND VERFAHREN ZUR EINSTELLUNG EINER LAGERANORDNUNG EINES VERSTELLANTRIEBS**
ADJUSTMENT DRIVE FOR A STEERING COLUMN, A STEERING COLUMN WITH A MOTOR DRIVEN LENGHT ADJUSTMENT DEVICE FOR A VEHICLE AND METHOD FOR ADJUSTING A BEARING ARRANGEMENT OF AN ADJUSTMENT DRIVE
DISPOSITIF D'ENTRAINEMENT D'UNE COLONNE DE DIRECTION, UNE COLONNE DE DIRECTION AJUSTABLE EN LONGUEUR À MOTEUR ET UN PROCÉDÉ POUR RÉGLER UN AGENCEMENT DU PALIER D'UN DISPOSITIF D'ENTRAINEMENT

(30) Priorität: 11.07.2018 DE 102018211493; 11.07.2018 DE 202018104386 U
(43) Veröffentlichungstag der Anmeldung: 19.05.2021
(73) Patentinhaber: thyssenkrupp Presta AG, 9492 Eschen (LI); thyssenkrupp AG, 45143 Essen (DE)
(72) Erfinder: HUBER, Sebastian, 6811 Göfis (AT); SCHACHT, Arne, 6800 Feldkirch (AT); SPECHT, Jean-Pierre, 9469 Haag (CH)
(74) Vertreter: thyssenkrupp Intellectual Property GmbH
(86) Internationale Anmeldenummer: PCT/EP2019/068368
(87) Internationale Veröffentlichungsnummer: WO 2020/011771

(56) Entgegenhaltungen:
- EP-A1- 2 857 282
- WO-A1-2018/138044
- WO-A2-2010/094318

## Beschreibung

### Stand der Technik

Die Erfindung betrifft einen Verstellantrieb für eine motorisch verstellbare Lenksäule für ein Kraftfahrzeug, umfassend eine in eine Spindelmutter eingreifende Gewindespindel mit einer Achse, eine Antriebseinheit und ein von der Antriebseinheit um die Achse drehend antreibbares, drehfest mit der Spindelmutter oder der Gewindespindel verbundenes Getrieberad, welches in einem Lagergehäuse in einer Lageranordnung zwischen zwei axial an dem Lagergehäuse abgestützten Außenlagerringen um die Achse drehbar gelagert ist, wobei die Außenlagerringe auf ihren einander zugewandten Seiten jeweils eine koaxial zur Achse umlaufende Außenlagerfläche aufweisen, welche jeweils einer an dem Getrieberad stirnseitig ausgebildeten Lagerfläche gegenüberliegt, wobei mindestens ein Außenlagerring an dem Lagergehäuse über ein elastisches Vorspannelement axial federnd abgestützt ist, welches eine die beiden Außenlagerringe axial gegeneinander verspannende Vorspannkraft ausübt. Weiterhin betrifft die Erfindung eine motorisch verstellbare Lenksäule für ein Kraftfahrzeug mit einem derartigen Verstellantrieb und ein Verfahren zur Einstellung einer Lageranordnung eines Verstellantriebs.

Lenksäulen für Kraftfahrzeuge weisen eine Lenkwelle mit einer Lenkspindel auf, an deren in Fahrtrichtung hinteren, dem Fahrer zugewandten Ende ein Lenkrad zur Einbringung eines Lenkbefehls durch den Fahrer angebracht ist. Die Lenkspindel ist um ihre Längsachse in einer Stelleinheit drehbar gelagert, die von einer Trageinheit an der Fahrzeugkarosserie gehalten ist. Dadurch, dass die Stelleinheit in einer mit der Trageinheit verbundenen Mantel-einheit, auch als Führungskasten oder Kastenschwinge bezeichnet, in Richtung der Längsachse teleskopartig verschiebbar aufgenommen ist, kann eine Längsverstellung erfolgen. Eine Höhenverstellung kann dadurch realisiert werden, dass die Stelleinheit oder eine diese aufnehmende Manteleinheit schwenkbar an der Trageinheit gelagert ist. Die Verstellung der Stelleinheit in Längs- bzw. Höhenrichtung ermöglicht die Einstellung einer ergonomisch komfortablen Lenkradposition relativ zur Fahrerposition in Betriebsstellung, auch als Fahr- oder Bedienposition bezeichnet, in der ein manueller Lenkeingriff erfolgen kann.

Es ist im Stand der Technik bekannt, zur Verstellung der Stelleinheit relativ zur Trageinheit einen motorischen Verstellantrieb mit einer Antriebseinheit vorzusehen, die einen elektrischen Stellmotor umfasst, der - in der Regel über ein Getriebe - mit einem Spindeltrieb verbunden ist, der eine in eine Spindelmutter eingeschraubte Gewindespindel umfasst. Durch die Antriebseinheit sind die Gewindespindel und die Spindelmutter gegeneinander um eine Achse, nämlich die Gewindespindelachse, drehend antreibbar, wodurch die Gewindespindel und die Spindelmutter je nach Drehrichtung translatorisch aufeinander zu oder voneinander weg bewegt werden können. In einer Ausführungsform ist die Gewindespindel von der Antriebseinheit, die feststehend mit der Stelleinheit oder der Trageinheit verbunden ist, um ihre Gewindespindelachse drehend antreibbar und greift in die Spindelmutter ein, die an der Trageinheit oder alternativ an der Stelleinheit bezüglich Drehung um die Gewindespindelachse feststehend angebracht ist. In Richtung der Gewindespindelachse stützt sich die Gewindespindel an der Trageinheit oder der Stelleinheit ab, und die Spindelmutter entsprechend an der Stelleinheit oder alternativ an der Trageinheit, so dass ein rotatorischer Antrieb der Gewindespindel eine translatorische Verstellung von Trageinheit und Stelleinheit relativ zueinander in Richtung der Gewindespindelachse bewirkt. Diese Ausführung wird daher auch als Rotationsspindelantrieb bezeichnet.

In einer alternativen Ausführungsform ist die Gewindespindel bezüglich Drehung um ihre Gewindespindelachse unverdrehbar mit der Trageinheit oder alternativ mit der Stelleinheit gekoppelt und die Spindelmutter ist drehbar, aber in Richtung der Gewindespindelachse feststehend entsprechend an der Stelleinheit oder alternativ an der Trageinheit gelagert. Wie in der ersten Ausführungsform stützt sich in Richtung der Gewindespindelachse die Gewindespindel an der Trageinheit oder an der Stelleinheit ab, und die Spindelmutter entsprechend an der Stelleinheit oder an der Trageinheit, so dass die Gewindespindel in Richtung der Gewindespindelachse translatorisch verschiebbar ist, indem die Spindelmutter von der Antriebseinheit drehend angetrieben wird. Diese Ausführung wird auch als Tauchspindelantrieb bezeichnet.

Durch den rotatorischen Antrieb der Gewindespindel wird wie bei der erstgenannten Ausführung eine translatorische Verstellung von Trageinheit und Stelleinheit relativ zueinander in Richtung der Gewindespindelachse bewirkt. In beiden Ausführungen bildet der Spindeltrieb einen zwischen Trageinheit und Stelleinheit wirksamen motorischen Verstellantrieb, durch den die Stelleinheit zur Verstellung relativ zur Trageinheit verstellt werden kann.

Zur Realisierung einer Längsverstellung der Stelleinheit in Richtung der Längsachse der Lenkspindel kann der Spindeltrieb eines Verstellantriebs zwischen der Stelleinheit und einer diese axial längsverschieblich aufnehmenden Manteleinheit, auch Führungskasten oder Kastenschwinge genannt, angeordnet sein, welche mit der Trageinheit verbunden ist, und wobei die Gewindespindelachse im Wesentlichen parallel zur Längsachse ausgerichtet sein kann. Zur Höhenverstellung kann ein Spindeltrieb zwischen der Trageinheit und einer daran höhenverschwenkbar gelagerten Stelleinheit oder Manteleinheit, in der die Stelleinheit aufgenommen ist, angeordnet sein. An einer Lenksäule können eine motorische Längs- und Höhenverstellung einzeln oder in Kombination ausgebildet sein.

Der Antrieb des Spindeltriebs erfolgt von der Antriebseinheit über ein um seine Achse, die identisch mit der Gewindespindelachse ist, drehend antreibbares Getrieberad, welches je nach Ausführung des Spindeltriebs mit der Spindelmutter oder mit der Gewindespindel drehfest verbunden ist. Das Getrieberad weist einen Verzahnungsabschnitt in Form eines Stirnrads auf, mit einer außen umlaufenden Verzahnung oder Schneckenverzahnung.

Das Getrieberad weist auf jeder seiner beiden Stirnseiten jeweils eine koaxial zur Achse umlaufende Lagerfläche auf. In einer Lageranordnung sind die Lagerflächen zwischen zwei korrespondierenden Außenlagerflächen angeordnet, die auf den gegeneinander gerichteten Seiten der beiden Außenlagerringe angeordnet sind, zwischen denen das Getrieberad drehbar gelagert ist. Die Außenlagerringe sind vom Getrieberad aus gesehen außen in axialer Richtung an dem Lagergehäuse abgestützt und fixiert. Dadurch werden die auf das Getrieberad in beiden axialen Richtungen der Gewindespindelachse auf den Spindeltrieb wirkenden Halte- und Verstellkräfte über das Getrieberad und die Außenlagerringe auf das Lagergehäuse übertragen, und von dort an der Stelleinheit oder der Trageinheit abgestützt.

Ein derartiger Verstellantrieb mit einem drehbar gelagerten und axial abgestützten Getrieberad ist beispielsweise aus der US 4,967,618 bekannt. Die Lagerflächen des Getrieberads weisen Laufbahnen für Wälzkörper auf, konkret Kugellaufbahnen von Kugellagern. Zwischen diesen Kugellaufbahnen und diesen gegenüberliegenden, korrespondierenden Kugellaufbahnen in den axial oder schräg gegenüberliegenden Außenlagerflächen der Außenlagerringe sind Kugeln als Wälzkörper angeordnet. Dadurch wird eine Lageranordnung gebildet, in der das Getrieberad in axialer Richtung abgestützt zwischen zwei axialen Drucklagern gelagert ist, die jeweils aus einer Lagerfläche, einer Außenlagerfläche und den dazwischen angeordneten Kugeln gebildet werden. Die Außenlagerringe sind starr an dem Lagergehäuse fixiert. Bei der Montage erfolgt die Einstellung einer Lageranordnung durch eine axiale Positionierung und Fixierung der Außenlagerringe relativ zueinander, so dass die Kugeln spielfrei zwischen den Kugellaufbahnen abrollen. Damit auch im Betrieb möglichst kein Lagerspiel auftritt, und um einen geräuscharmen Lauf zu gewährleisten, werden die Außenlagerringe in dem Lagergehäuse gegeneinander verspannt, so dass die Lager- und Außenlagerflächen axial gegeneinander angedrückt werden. Dabei muss einerseits die auf die Außenlagerringe ausgeübte axiale Einstellkraft hoch genug sein, damit auch unter Temperaturschwankungen und bei Verschleiß ein spielfreier Lauf der Kugeln gewährleistet ist. Andererseits darf die Einstellkraft jedoch nicht zu hoch sein, wodurch ein erhöhtes Durchdrehmoment des Getrieberads und erhöhter Verschleiß auftreten können.

Ein Verstellantrieb der eingangs genannten Art ist aus der WO 2018/138044 A1 bekannt.

WO 2018/138044 A1 ist ein Dokument nach Artikel 54(3) EPÜ zu betrachten.

EP 2 857 282 A1 offenbart einen Verstellantrieb nach dem Oberbegriff des Anspruchs 1. Angesichts der vorangehend erläuterten Problematik ist es eine Aufgabe der vorliegenden Erfindung, einen verbesserten Verstellantrieb und eine Lenksäule mit einem verbesserten Verstellantrieb anzugeben.

### Darstellung der Erfindung

Diese Aufgabe wird gelöst durch einen Verstellantrieb mit den Merkmalen des Anspruchs 1 und eine motorisch verstellbare Lenksäule für ein Kraftfahrzeug mit den Merkmalen des Anspruchs 8. Anspruch 9 gibt ein Verfahren zur Einstellung einer erfindungsgemäßen Lageranordnung eines Verstellantriebs für eine motorisch verstellbare Lenksäule für ein Kraftfahrzeug an. Vorteilhafte Weiterbildungen ergeben sich aus den Unteransprüchen.

Zur Lösung der genannten Aufgabe wird ein Verstellantrieb für eine motorisch verstellbare Lenksäule für ein Kraftfahrzeug mit den der eingangs genannten Merkmalen vorgeschlagen, bei dem erfindungsgemäß das Vorspannelement als einstückiges Sicherungselement ausgebildet ist.

Das Vorspannelement umfasst ein Sicherungselement. Dieses Sicherungselement kann axial mit der Vorspannkraft elastisch komprimiert werden, und überträgt diese als Federkraft dauerhaft auf die Lageranordnung. Das Sicherungselement dient weiterhin als Halte- oder Stützelement, welches in axialer Richtung an dem Lagergehäuse festgelegt ist, beispielsweise über eine Form-, Kraft- und/oder Stoffschlussverbindung. Die Verbindung kann lösbar ausgestaltet sein, beispielsweise durch eine Klemm-, Rast-, oder Schraubverbindung, oder unlösbar, beispielsweise durch Verschweißen.

Erfindungsgemäß ist das Vorspannelement als einstückiges Sicherungselement ausgebildet.

Das Sicherungselement ist bevorzugt als einstückiges Blechumformteil ausgebildet, bevorzugt als einstückig-integrales Bauteil. Bevorzugt ist das Sicherungselement einstückig als Federelement ausgebildet, wobei zwischen dem Federelement und dem Außenring ein Zwischenelement als Dämpfungselement angeordnet ist. Dieses Zwischenelement kann beispielsweise als Elastomerelement ausgebildet sein, wie beispielsweise ein O-Ring. Alternativ kann das Zwischenelement auf dem Sicherungselement aufgebracht sein, beispielsweise durch ein aufvulkanisiertes Elastomerelement.

Die beiden Außenlagerringe sind in Achsrichtung elastisch eingespannt. Die Achsrichtung entspricht der Richtung der Längsachse. Das mindestens eine Vorspannelement wird durch ein axial wirksames Federelement gebildet, welches sich auf seiner von der Lageranordnung, also von den Außenlageringen nach außen abgewandten Seite axial an dem Lagergehäuse abstützt, und auf seiner anderen Seite in axial auf den korrespondierenden Außenlagerring wirkt. In montierten Betriebszustand ist das Vorspannelement in axialer Richtung, also in Richtung der Längsachse, so weit vorgespannt bzw. komprimiert, dass es ein vorgegebene Vorspannkraft auf den Außenlagerring ausübt, und ist in dieser Vorspann- oder Montageposition relativ zum Lagergehäuse fixiert. Das auf diese Weise axial gespannte Vorspannelement presst mit der elastischen Kraft, also der Federkraft, den Außenlagerring gegen das Getrieberad, welches dadurch mit der Vorspannkraft auch gegen den anderen Außenlagerring angedrückt wird. Die Lageranordnung wird somit durch das Vorspannelement in Achsrichtung elastisch vorgespannt.

Ein Vorteil der Erfindung ist, dass die Vorspannkraft, die durch die Komprimierung des Vorspannelements bei der Montage eingestellt werden kann, auch unter ungünstigen Betriebsbedingungen, beispielsweise thermischer Belastung oder Verschleiß, über die gesamte Lebensdauer des Verstellantriebs für einen gleichmäßigeren axialen Druck zwischen den Lagerflächen und den korrespondierenden Außenlagerflächen sorgt, wodurch unerwünschtes und schädliches Lagerspiel unterdrückt wird. In einer Wälzlageranordnung rollen die Wälzkörper spielfrei ab, und in einer alternativen Gleitlageranordnung ist ein optimierter Gleitkontakt sichergestellt. Dadurch wird die Laufruhe erhöht und Verschleiß minimiert.

Es ist möglich, dass das Vorspannelement die Vorspannkraft auf den einen der beiden Außenlagerringe ausübt, und der andere Außenlagerring an dem Lagergehäuse an einem Widerlager axial starr abgestützt ist. Die Vorspannkraft wird dadurch axial in Vorspannrichtung in die relativ zum Lagergehäuse feststehende Lageranordnung eingekoppelt. Alternativ ist es möglich, zwei Vorspannelemente vorzusehen, die von beiden Seiten jeweils auf die Außenlagerringe einwirken. Dadurch ist die Lageranordnung ebenfalls elastisch vorgespannt, und außerdem bezüglich relativ zum Lagergehäuse in beide Achsrichtungen elastisch gehalten.

Dadurch können Drehmomentspitzen elastisch abgefangen und gedämpft werden.

Das Vorspannelement kann ein ringförmiges Federelement umfassen. Das Federelement kann axial mit der Vorspannkraft elastisch komprimiert werden, und überträgt diese als Federkraft dauerhaft auf die Lageranordnung. Die ringförmige Ausbildung koaxial zur Achse korrespondiert mit den Abmessungen des Außenrings, gegen den das Federelement in montiertem Zustand direkt oder mittelbar anliegt. Der Federweg in axialer Richtung kann an die im Betrieb zu erwartenden Abweichungen durch Verschleiß und Temperaturschwankungen angepasst werden, so dass diese Abweichungen, die im Laufe der Lebensdauer auftreten, wirksam dank der erfindungsgemäßen Lösung ausgeglichen werden. Das Federelement kann beispielsweise einen Feder- oder Wellring, eine Schrauben-, Teller- oder Blattfeder oder dergleichen umfassen, bevorzugt aus Federstahl, oder alternativ, oder auch in Kombination, einen ebenfalls in axialer Richtung elastisch verformbaren Elastomer-, Gummi- oder O-Ring oder einen aus Elastomer gebildeten Schnurring. Für optimierte Feder- und Dämpfungseigenschaften können unterschiedliche Bauformen von Federelementen kombiniert werden, beispielsweise ein Federring und ein O-Ring an einem oder beiden Außenlagerringen.

In einer bevorzugten Ausführung kann vorgesehen sein, dass das Vorspannelement an einem mit dem Lagergehäuse verbundenen Sicherungselement abgestützt ist. Das Sicherungselement dient als Halte- oder Stützelement, welches in axialer Richtung an dem Lagergehäuse festgelegt ist, beispielsweise über eine Form-, Kraft- und/oder Stoffschlussverbindung. Die Verbindung kann lösbar ausgestaltet sein, beispielsweise durch eine Klemm-, Schraub- oder Rastverbindung, oder unlösbar, beispielsweise durch Verschweißen. Ein erfindungsgemäßes Vorspannelement kann zwischen dem Sicherungselement und einem Außenlagerring elastisch eingespannt sein. Es ist ebenfalls möglich, dass sich einer der Außenlagerringe ohne zwischengeschaltetes Vorspannelement über ein Sicherungselement an dem Lagergehäuse abstützt, welches dann ein starres Widerlager bildet.

Das Vorspannelement kann in Form und Abmessungen an einen Außenlagerring und ein Sicherungselement angepasst sein, das beispielsweise als ringförmiger oder segmentförmiger Sicherungsring ausgebildet sein kann. Es ist möglich, ein Sicherungselement auf einer Stirnseite einer Lageranordnung vorzusehen, die auf ihrer anderen Seite gegen ein mit der Lagergehäuse verbundenen oder daran ausgebildeten Widerlager abgestützt ist. Es ist ebenfalls möglich, dass die Lageranordnung zwischen zwei Sicherungselementen an dem Lagergehäuse festgelegt ist, so dass die von dem Vorspannelement erzeugte Vorspannkraft über die Sicherungselemente in das Lagergehäuse eingeleitet wird.

In einer Weiterbildung kann vorgesehen sein, dass das Vorspannelement zumindest teilweise durch das Sicherungselement gebildet wird. Dies kann dadurch erreicht werden, dass das Sicherungselement in sich in axialer Richtung elastisch ausgebildet ist. Dadurch erhält es eine Doppelfunktion, nämlich zum einen die Abstützung und Halterung an dem Lagergehäuse, und zum anderen die Erzeugung der elastischen Vorspannkraft. Beispielsweise kann das Sicherungselement als Sicherungsring ausgebildet sein, beispielsweise aus Federstahl, der an seinem Umfang Befestigungsmittel aufweist, wie etwa formschlüssig eingreifende Haltekanten oder -schneiden. Außerhalb der Befestigungsmittel können an dem Sicherungsring axial wirksame Federelemente vorgesehen sein, beispielsweise ein konischer Abschnitt einer Tellerfeder, ein gewellter Abschnitt einer Wellfeder, federnde Laschen oder dergleichen. Die Federelemente können sich von außen an einem Außenlagerring direkt oder mittelbar abstützen.

Zwischen dem Getrieberad und den Außenlagerringen können Wälzkörper angeordnet sein. Dabei bildet das Getrieberad zusammen mit einem Außenlagerring und den dazwischen angeordneten Wälzkörpern jeweils ein Schrägwälzlager. Es kann sowohl eine X- als auch eine O-Anordnung der Schrägwälzlager vorgesehen sein. Alternativ kann auch ein Axialwälzlager vorgesehen sein. Alternativ ist es denkbar und möglich, dass eine Außenlagerfläche und eine korrespondierende Lagerfläche aufeinander gleitende Gleitflächen zur Bildung eines Schräggleitlagers aufweisen.

Einer der beiden Außenlagerringe kann an dem Lagergehäuse an einem Widerlager axial starr abgestützt sein. Dadurch wird die über den anderen Außenlagerring durch das Vorspannelement elastisch belastetet Lageranordnung feststehend an dem Lagergehäuse abgestützt. Das Widerlager kann fest an dem Lagergehäuse ausgebildet sein, oder durch ein an dem Lagergehäuse festgelegten Sicherungselement gebildet werden. Das Widerlager kann bevorzugt als Schulter ausgebildet sein, wobei diese Schulter bevorzugt durch eine Umformoperation beispielsweise durch umlaufende Rollierung ausgebildet ist, wobei eine auf der äußeren Mantelfläche eingeformte Sicke eine Schulter auf der inneren Mantelfläche ausbildet. Alternativ können auch über den Umfang verteilte Vorsprünge eine solche Schulter bilden. Diese Vorsprünge können beispielsweise durch lokale plastische Deformationen von außen in das Lagergehäuse eingebracht werden.

Eine vorteilhafte Ausführungsform der Erfindung sieht vor, dass das Lagergehäuse einen hohlzylindrischen Aufnahmeraum aufweist, in dem die Außenlagerringe und das Getrieberad koaxial zur Achse angeordnet sind. Der Aufnahmeraum bildet einen Durchgang mit kreisrundem Innenquerschnitt, in dem die aus dem Getrieberad und den Außenlagerringen gebildete Lageranordnung koaxial aufgenommen ist. Das oder die Sicherungselemente können bevorzugt ebenfalls ringförmig als Sicherungsringe ausgebildet sein, die koaxial in dem Aufnahmeraum angeordnet und fixiert sind.

Eine Weiterbildung sieht vor, dass das Sicherungselement Befestigungsmittel zur Fixierung innen in dem Aufnahmeraum aufweist. Dadurch, dass das Sicherungselement kraft- und/oder formschlüssig an Innenwandung festgelegt wird, kann die gesamte Lageranordnung einschließlich der axialen Abstützung in dem Lagergehäuse angeordnet sein, wodurch ein kompakter und geschützter Aufbau realisierbar ist. Eine vorteilhafte Ausführung ist, dass das Sicherungselement als Sicherungsring mit einem Außenquerschnitt ausgebildet ist, der mit dem Innenquerschnitt des Aufnahmeraums des Lagergehäuses korrespondiert. An dem Außenumfang des bevorzugt runden Sicherungsrings können Befestigungsmittel zur Verbindung mit der Innenwandung des Aufnahmeraums angeordnet oder ausgebildet sein. Beispielsweise können die Befestigungsmittel Haltestrukturen am Außenumfang des Sicherungsring umfassen, beispielsweise schneidenförmige, scharfkantige Kanten oder Schneiden, die formschlüssig in die Innenwandung einbringbar oder einpressbar sind und den Sicherungsring gegen axiale Bewegung zu sichern, um ein Vorspannelement oder einen Außenlagerring in der geforderten Vorspannposition axial im Lagergehäuse zu fixieren.

Dabei kann vorgesehen sein, dass die Befestigungsmittel selbstfixierend ausgebildet sind. Das kann beispielsweise durch widerhakenartig ausgebildete Haltestrukturen erreicht werden, welche auf der Innenwandung des Aufnahmeraums entlanggleiten, wenn das Sicherungselement bei der Montage in Vorspannrichtung axial in den Durchgang des Lagergehäuses eingebracht wird und mit der Vorspannkraft gegen ein Vorspannelement angepresst wird. Im Betriebszustand nach der Montage wird das Sicherungselement entgegen der Vorspannrichtung durch die Vorspannkraft axial belastet, wodurch sich die widerhakenartigen Haltestrukturen der Befestigungsmittel radial aufgespreizt werden und sich selbsttägig in der Innenwandung festkrallen, wodurch der Sicherungsring relativ zum Lagergehäuse axial fixiert wird. Als selbstfixierendes Befestigungsmittel kann beispielsweise eine relativ zur Achse geneigte Schneidenkante vorgesehen sein, die zumindest abschnittweise am Außenumfang des Sicherungsrings ausgebildet oder angeordnet ist. Dies ermöglicht zur Montage ein einfaches axiales Einsetzen in den Aufnahmeraum in Vorspannrichtung gegen das Vorspannelement. Nach erfolgter Montage wird die Schneidenkante durch die dann entgegen der Einsetzrichtung wirkende Vorspannkraft radial in die Innenwandung plastisch eingegraben und dadurch formschlüssig in axiale Richtung fixiert. Derartige selbstfixierende Haltemittel mit widerhakenartigen Haltestrukturen sind mit geringem Aufwand realisierbar, ermögliche eine einfache Montage und einen sicheren Halt.

Die Erfindung umfasst weiterhin eine motorisch verstellbaren Lenksäule für ein Kraftfahrzeug welche einen Verstellantrieb mit den vorangehend beschriebenen Merkmalen aufweist, mit einer Trageinheit, die an einer Fahrzeugkarosserie anbringbar ist, und von der eine Stelleinheit gehalten ist, in der eine Lenkspindel um eine Längsachse drehbar gelagert ist, und mit einem Verstellantrieb, der mit der Trageinheit und mit der Stelleinheit verbunden ist, und von dem die Stelleinheit relativ zur Trageinheit verstellbar ist, wobei der Verstellantrieb eine in eine Spindelmutter eingreifende Gewindespindel mit einer Achse, eine Antriebseinheit und ein von der Antriebseinheit um die Achse drehend antreibbares, drehfest mit der Spindelmutter oder der Gewindespindel verbundenes Getrieberad umfasst, welches in einem Lagergehäuse in einer Lageranordnung zwischen zwei axial an dem Lagergehäuse abgestützten Außenlagerringen um die Achse drehbar gelagert ist, wobei die Außenlagerringe auf ihren einander zugewandten Seiten jeweils eine koaxial zur Achse umlaufende Außenlagerfläche aufweisen, welche jeweils einer an dem Getrieberad stirnseitig ausgebildeten Lagerfläche gegenüberliegt.

Dadurch kann eine verbesserte Laufruhe des Verstellantriebs unter allen auftretenden Betriebsbedingungen einer Lenksäule erreicht werden, was für die Akzeptanz beim Fahrer von besonderer Bedeutung ist. Weiterhin werden der Verschleiß und damit der Wartungsaufwand in vorteilhafter Weise reduziert.

Ein erfindungsgemäßes Verfahren zur Einstellung einer Lageranordnung eines Verstellantriebs für eine motorisch verstellbare Lenksäule für ein Kraftfahrzeug, umfassend eine in eine Spindelmutter eingreifende Gewindespindel mit einer Achse, und ein drehfest mit der Spindelmutter oder der Gewindespindel verbundenes Getrieberad, welches in einem Lagergehäuse in einer Lageranordnung zwischen zwei axial an dem Lagergehäuse abgestützten Außenlagerringen um die Achse drehbar gelagert ist, wobei ein Außenlagerring an dem Lagergehäuse über ein elastisches Vorspannelement axial federnd abgestützt ist, wobei die Außenlagerringe auf ihren einander zugewandten Seiten jeweils eine koaxial zur Achse umlaufende Außenlagerfläche aufweisen, welche jeweils einer an dem Getrieberad stirnseitig ausgebildeten Lagerfläche gegenüberliegt,
umfasst die Schritte:
A) Aufbringen einer axialen Vorspannkraft auf das Vorspannelement,
B) Aufbringen eines Belastungsmoments auf das Getrieberad und Messen des Belastungsmoments,
C) Messen einer mit dem Belastungsmoment korrelierten Lagerzustandsgröße (Belastungsmoment selbst, oder auch: Verlagerung des Getrieberads),
D) Vergleichen der gemessenen Lagerzustandsgröße mit einem vorgegebenen Zustandszielwert,
E) wenn die gemessene Lagerzustandsgröße von dem Zustandszielwert (innerhalb vorgegebener Toleranzbereiche) abweicht: Verändern der axialen Vorspannkraft,
F) wenn die gemessene Lagerzustandsgröße den Zustandszielwert (innerhalb vorgegebener Toleranzbereiche) erreicht: Fixieren des Vorspannelements (9) in axialer Vorspannposition am Lagergehäuse und Beenden der Einstellung.

Das erfindungsgemäße Verfahren ermöglicht eine optimierte Einstellung einer Lageranordnung mit den oben beschriebenen Merkmalen, die ein erfindungsgemäßes Vorspannelement aufweist. Dabei mindestens eine von der Vorspannkraft unmittelbar oder mittelbar abhängige Lagerzustandsgröße innerhalb vorgegebener Toleranzen auf einen Zustandszielwert gebracht, d.h. in einen optimalen Zustandszielbereich eingeregelt. Dadurch kann eine hohe Laufruhe, ein geringer Verschleiß und eine möglichst hohe Steifigkeit der Lageranordnung erreicht werden.

Das Aufbringen einer axialen Vorspannkraft auf das Vorspannelement kann dem Aufbringen einer axialen Einpresskraft entsprechen, die auf das Vorspannelement wirkt, wobei die wirkende Einpresskraft der Vorspannkraft entgegengesetzt ist.

Im ersten Schritt A) wird eine vormontierte Lageranordnung bereitgestellt, wobei die Außenlagerringe und das mindestens eine Vorspannelement mit einem definierten, vorgegebenen Startwert der Vorspannkraft zusammengehalten werden. Der Startwert wird dabei so gewählt, dass die Vorspannkraft am oder unterhalb eines zur betriebsfertigen Montage erforderlichen Grenzwerts liegt, so dass mit anderen Worten die axiale Vorspannkraft eine lose Vormontage erzeugt.

Im nächsten Schritt B) wird ein Belastungsmoment auf das Getrieberad ausgeübt. Ein Belastungsmoment kann beispielsweise ein Durchdrehmoment sein, mit dem das Getrieberad um seine Achse drehend angetrieben werden muss, um eine Drehung in der Lageranordnung auszuführen, oder auch ein Kipp- oder Verlagerungsmoment, welches quer zur Achse auf das Getrieberad wirkt. Diese beiden Betriebsfälle werden weiter unten näher erläutert.

Im Folgenden wird in Schritt C) eine mit dem Belastungsmoment korrelierte Lagerzustandsgröße gemessen. Dabei kann die Größe des Belastungsmoments selbst gemessen werden, beispielsweise das in das Getrieberad eingekoppelte Durchdrehmoment oder Kippmoments, und alternativ oder zusätzlich auch eine vom Belastungsmoment abhängige Größe, wie beispielsweise eine Verlagerung des Getrieberads, beispielsweise eine Verkippung zur Achse, die durch ein eingekoppeltes Belastungsmoment erzeugt wird, beispielsweise ein besagtes Kippmoment.

Im Schritt D) wird die gemessene Lagerzustandsgröße mit einem vorgegebenen Zustandszielwert verglichen. Der Zustandszielwert definiert einen Referenzwert, der einem Lagerzustand entspricht, der im Betriebszustand eingehalten werden soll.

Schritt E) erfolgt, wenn die gemessene Lagerzustandsgröße von dem Zustandszielwert -innerhalb vorgegebener Toleranzbereiche - abweicht. Hierzu wird die axiale Vorspannkraft verändert, um den Ist-Wert der Lagerzustandsgröße in Richtung auf den Zustandstzielwert zu bewegen. Wenn die gemessene Lagerzustandsgröße den Zustandszielwert - innerhalb vorgegebener Toleranzbereiche - erreicht, wird das Vorspannelements in axialer Vorspannposition am Lagergehäuse fixiert, d.h. abgestützt, so dass es die eingestellte Vorspannkraft dauerhaft auf die Lageranordnung ausübt. Damit ist die Einstellung beendet.

Bevorzugt wird die Vorspannkraft auf ein vor einem Außenlagerring angeordnetes Sicherungselement ausgeübt. Das Sicherungselement wird in Richtung der Vorspannkraft axialgegen den Außenlagerring bewegt und gegen diesen angedrückt. Je weiter das Sicherungselement gegen das Vorspannelement bewegt wird, desto stärker wird dieses komprimiert und entsprechend wird die Vorspannkraft erhöht. Wenn bei der Einstellung der vorgegebene Wert der Vorspannkraft erreicht ist, wird das Sicherungselement in der dann eingestellten Vorspannposition an dem Lagergehäuse fixiert.

Ein Vorteil des erfindungsgemäßen Verfahrens ist, dass die Vorspannung der Lageranordnung in einem Regelprozess unter Berücksichtigung einer von der Vorspannkraft abhängigen Lagerzustandsgröße erfolgen kann.

Eine mögliche Ausführung des Verfahrens umfasst die Schritte:
B1) Aufbringen eines Durchdrehmoments als Belastungsmoment zum rotierendes Antreiben des Getrieberads und dabei Messen des Durchdrehmoments als korrelierende Lagerzustandsgröße,
C1) Vergleichen des gemessenen Durchdrehmoments mit einem vorgegebenen Drehmomentzielwert als Lagerzustandsgröße,
E1) wenn das gemessene Durchdrehmoment als Lagerzustandsgröße kleiner ist als der vorgegebene Drehmomentzielwert als Zustandszielwert: Erhöhen der axialen Vorspannkraft,
F1) wenn das Durchdrehmoment als Lagerzustandsgröße den vorgegebenen Drehmomentzielwert als Zustandszielwert erreicht: Fixieren des Vorspannelements in axialer Vorspannposition am Lagergehäuse und Beenden der Einstellung.

Somit entspricht in dieser Ausführung des Verfahrens das Durchdrehmoment dem Belastungsmoment, das gemessene Durchdrehmoment der korrelierten Lagerzustandsgröße und der Drehmomentenzielwert dem Zustandszielwert.

Zur Durchführung der Einstellung wird die Lageranordnung umfassend die Außenlagerringe und das Getrieberad, und gegebenenfalls die dazwischen angeordneten Wälzkörper, in dem Lagergehäuse angeordnet. Das Getrieberad wird drehend angetrieben. Der Antrieb kann durch die Antriebseinheit des Verstellantriebs erfolgen. Alternativ kann bei einem Rotationsspindelantrieb, bei dem die Gewindespindel drehfest mit dem Getrieberad verbunden ist, der Antrieb des Getrieberads durch einen externen Einstellantrieb erfolgen, der die Gewindespindel drehend antreibt.

Das Belastungsmoment ist hierbei das Durchdrehmoment, also das Antriebsmoment, welches aufgewendet werden muss, um das Getrieberad in der Lageranordnung zu drehen. Dieses Antriebsmoment kann mittels geeigneter Sensoren gemessen werden, beispielsweise über Drehmomentsensoren, oder über einen Motorstrom der Antriebseinheit oder eines externen Einstellantriebs.

Während des drehenden Antriebs wird eine axiale Vorspannkraft auf das Vorspannelement aufgebracht, beispielsweise über ein Sicherungselement, welches das Vorspannelement axial gegen einen Außenlagerring andrückt. Die Vorspannkraft wird dabei bevorzugt mittels geeigneter Kraftsensoren gemessen.

Die Vorspannkraft wird anschließend schrittweise oder kontinuierlich erhöht. Dadurch steigt die Lagerreibung der Lageranordnung an, und das mit der Vorspannkraft korrelierte, gemessene Durchdrehmoment steigt ebenfalls an.

Das momentan gemessene Durchdrehmoment, welches mit einer aufgebrachten Vorspannkraft korreliert, wird schrittweise oder kontinuierlich bevorzugt automatisiert mit einem vorgegebenen Drehmomentzielwert verglichen.

Wenn das gemessene Durchdrehmoment kleiner ist als der vorgegebene Drehmomentzielwert, bedeutet dies, dass das Lagerspiel noch zu groß ist, beziehungsweise die Vorspannung noch zu gering ist, so dass die erforderliche Steifigkeit der Lageranordnung und ein spielfreier Lauf unter Lastbedingungen im Betrieb noch nicht gewährleistet ist. In diesem Fall wird die Vorspannkraft erhöht, und das gemessene Durchdrehmoment wird erneut gemessen und mit dem Drehmomentzielwert verglichen.

Die vorgenannten Schritte werden so oft durchlaufen, bis das Durchdrehmoment den vorgegebenen Drehmomentzielwert erreicht. In der dabei erreichten axialen Position, der Vorspannposition, wird das Vorspannelement relativ zum Lagergehäuse fixiert, bevorzugt durch ein Sicherungselement. In der Vorspannposition wird das Vorspannelement dabei derart axial an dem Lagergehäuse abgestützt, dass es die eingestellte Vorspannkraft dauerhaft auf den Außenlagerring ausübt.

Dadurch wird eine kraft- bzw. drehmomentgesteuerte Einstellung des Durchdrehmoments realisiert, wobei die Vorspannkraft durch das gemessene Durchdrehmoment geregelt wird. Es wird eine automatisierte, präzise Einstellung des Durchdrehmoments ermöglicht. Durch das Vorspannelement wird gewährleistet, dass das eingestellte Durchdrehmoment des Verstellantriebs unabhängig von Verschleiß und Betriebsbedingungen über die gesamte Lebensdauer des Verstellantriebs im Wesentlichen konstant bleibt.

Alternativ, oder auch zusätzlich bzw. zusammen mit der zuletzt beschriebenen Ausführung kann das erfindungsgemäße Verfahren die folgenden Schritte vorsehen:
B2) Aufbringen eines Kippmoments als Belastungsmoment quer zur Achse auf das Getrieberad und dabei Messen einer Verlagerung des Getrieberads relativ zum Lagergehäuse als korrelierende Lagerzustandsgröße,
C2) Vergleichen der gemessenen Verlagerung als Lagerzustandgröße mit einem vorgegebenen Steifigkeitsgrenzwert als Zustandszielwert,
E2) wenn die gemessene Verlagerung als Lagerzustandsgröße größer ist als ein vorgegebener Steifigkeitsgrenzwert als Zustandszielwert: Erhöhen der axialen Vorspannkraft,
F2) wenn die gemessene Verlagerung als Lagerzustandsgröße den vorgegebenen Steifigkeitsgrenzwert erreicht: Fixieren des Vorspannelements in axialer Vorspannposition am Lagergehäuse und Beenden der Einstellung.

Somit entspricht in dieser Ausführung des Verfahrens das Kippmoment dem Belastungsmoment, das gemessene Verlagerung des Getrieberads relativ zum Lagergehäuse der korrelierten Lagerzustandsgröße und der Steifigkeitsgrenzwert dem Zustandszielwert.

Durch Aufbringen eines Kippmoments wird die Lageranordnung quer auf Biegung belastet. Die dabei auftretende seitliche Verformung ist ein Maß für Steifigkeit der Lageranordnung. Die Steifigkeit der Lageranordnung ist abhängig von der Vorspannkraft, wobei eine hohe Vorspannkraft mit einer hohen Steifigkeit korreliert ist.

Wie bei den oben beschriebenen Ausführungen wird zunächst ein Startwert der Vorspannkraft eingestellt. Als Belastungsmoment wird ein Kippmoment auf das Getrieberad ausgeübt. Das Kippmoment kann beispielsweise durch eine quer in die Gewindespindel eingebrachte Kipp- oder Biegekraft eingekoppelt werden.

Die durch das Kippmoment erzeugte Verlagerung des Getrieberads wird gemessen, beispielsweise durch eine radiale Auslenkung der mit dem Getrieberad verbundenen Gewindespindel.

Die gemessene Verlagerung wird verglichen mit einem dem Steifigkeitsgrenzwert. Dieser bezeichnet einen mit der erforderlichen Steifigkeit korrelierten Referenzwert der Verlagerung.

Solange die gemessene Verlagerung größer ist als ein vorgegebener Steifigkeitsgrenzwert, ist die erforderliche Steifigkeit nicht gegeben. In diesem Fall wird die Vorspannkraft erhöht, bis die gemessene Verlagerung innerhalb vorgegebener Toleranzbereiche kleiner oder gleich dem Steifigkeitsgrenzwert ist. Dadurch wird eine weggesteuerte Einstellung der Steifigkeit realisiert, wobei die Vorspannkraft durch die gemessene Verlagerung des Getrieberads geregelt wird.

Die Vorspannkraft kann wie vorangehend beschrieben abhängig vom Durchdrehmoment oder vom Kippmoment, oder auch von Durchdreh- und Kippmoment eingestellt werden.

Dadurch kann eine optimierte Einstellung eines Verstellantriebs erfolgen, welche eine möglichst hohe Steifigkeit bei leichtgängiger Verstellbarkeit gewährleistet.

Beim Aufbringen der Vorspannkraft kann ein Messen der Vorspannkraft erfolgen. Durch Vergleich mit den anderen Messgrößen können Fehler detektiert werden. Beispielsweise kann ein abweichend hohes Durchdrehmoment bei einer relativ kleinen Vorspannkraft auf einen Defekt hindeuten, der zu einem schwergängigen Lager führen kann.

Das Durchdrehmoment und/oder das Kippmoment kann über die Gewindespindel eingebracht werden. Die Gewindespindel, die insbesondere bei einem Rotationsspindelantrieb fest mit dem Getrieberad verbunden ist, kann mit einem externen Einstellantrieb drehend antreibbar sein, um das Getrieberad drehend anzutreiben. Dadurch, dass mit axialem Abstand eine Kippkraft quer zur Achse in die Gewindespindel eingeleitet wird, kann sowohl beim Tauchals auch beim Rotationsspindelantrieb ein Kippmoment in das Getrieberad eingeleitet werden.

Weiterhin betrifft die Erfindung ein weiteres Verfahren zur Einstellung einer Lageranordnung eines Verstellantriebs für eine motorisch verstellbare Lenksäule für ein Kraftfahrzeug, umfassend eine in eine Spindelmutter eingreifende Gewindespindel mit einer Achse, und ein drehfest mit der Spindelmutter oder der Gewindespindel verbundenes Getrieberad, welches in einem Lagergehäuse in einer Lageranordnung zwischen zwei axial an dem Lagergehäuse abgestützten Außenlagerringen um die Achse drehbar gelagert ist, wobei ein Außenlagerring (93) an dem Lagergehäuse über ein elastisches Vorspannelement axial federnd abgestützt ist, wobei die Außenlagerringe auf ihren einander zugewandten Seiten jeweils eine koaxial zur Achse umlaufende Außenlagerfläche aufweisen, welche jeweils einer an dem Getrieberad stirnseitig ausgebildeten Lagerfläche gegenüberliegt,
umfassend die Schritte:
A) Aufbringen einer axialen Vorspannkraft auf das Vorspannelement,
B) Messen der axialen Vorspannkraft,
D) Vergleichen der gemessenen Vorspannkraft mit einer vorgegebenen Zielvorspannkraft,
E) wenn die gemessene Vorspannkraft von der vorgegebenen Zielvorspannkraft abweicht: Verändern der axialen Vorspannkraft,
F) wenn die gemessene Vorspannkraft die vorgegebene Zielvorspannkraft erreicht: Fixieren des Vorspannelements in axialer Vorspannposition am Lagergehäuse und Beenden der Einstellung.

Bevorzugt kann die Zielvorspannkraft einen Bereich umfassen. Die Zielvorspannkraft ist somit als Zielvorspannbereich ausgebildet. Dieser Bereich kann in Versuchen ermittelt werden, so dass in diesem Bereich die Lageranordnung die entsprechenden Anforderungen bzgl. Laufruhe, Steifigkeit und Durchdrehmoment erfüllt.

Die Vorspannkraft kann auf ein vor einem Außenlagerring angeordnetes Sicherungselement ausgeübt werden. Dabei ist es vorteilhaft, dass das Sicherungselement in Richtung der Vorspannkraft relativ zum Lagergehäuse bewegbar ist, und entgegen der Vorspannkraft am Lagergehäuse selbstfixierend ausgebildet ist. Wie oben beschrieben, können die Außenlagerringe und das Getrieberad koaxial in einem hohlzylindrischen Aufnahmeraum des Lagergehäuses angeordnet sein, und das Sicherungselement wird durch einen Sicherungsring gebildet, der widerhakenartige Befestigungsmittel aufweist. Ein derartig selbstfixierender Sicherungsring kann unter der Wirkung der Vorspannkraft leicht in Vorspannrichtung gegen die Lageranordnung angepresst werden. In montiertem Zustand wirkt die nunmehr durch die Federkraft des Vorspannelements wirkende Vorspannkraft in entgegengesetzter Richtung auf den Sicherungsring, wodurch dieser sich festkrallt oder mit entsprechenden Schneidkanten formschlüssig in das Lagergehäuse eingräbt, und sich dadurch selbsttägig in seiner Vorspannposition fixiert.

Bevorzugt liegt das Kernelement außerhalb des Kraftflusses zwischen den Lagerringen. Dadurch wird eine auf die Lagerringe in Richtung der Achse wirkende Kraft nicht in das Kernelement eingeleitet. Die sich gegeneinander abstützenden Lagerringe bilden eine Stützeinrichtung, welche axial auf die Lagerringe einwirkende Druckkräfte außerhalb des Kernelement abstützt und somit vom Kernelement abhält.

Weiterhin wird zur Lösung der Aufgabe ein Verstellantrieb für eine motorisch verstellbare Lenksäule für ein Kraftfahrzeug vorgeschlagen, umfassend eine in eine Spindelmutter eingreifende Gewindespindel mit einer Achse, eine Antriebseinheit und ein von der Antriebseinheit um die Achse drehend antreibbares Getrieberad, welches einen Verzahnungsabschnitt aufweist, der axial zwischen zwei koaxial zur Achse umlaufenden Lagerflächen angeordnet ist, wobei das Getrieberad drehfest mit der Spindelmutter oder der Gewindespindel verbunden ist. Erfindungsgemäß wird für einen gattungsgemäßen Verstellantrieb mit den zuvor genannten Merkmalen vorgeschlagen, dass das Getrieberad ein Kernelement aufweist, mit dem zwei Lagerringe verbunden sind, welche jeweils eine Lagerfläche aufweisen und die sich axial gegeneinander abstützen.

Bevorzugt liegt das Kernelement außerhalb des Kraftflusses zwischen den Lagerringen. Dadurch wird eine auf die Lagerringe in Richtung der Achse wirkende Kraft nicht in das Kernelement eingeleitet. Die sich gegeneinander abstützenden Lagerringe bilden eine Stütz-einrichtung, welche axial auf die Lagerringe einwirkende Druckkräfte außerhalb des Kernelement abstützt und somit vom Kernelement abhält.

Bei dem erfindungsgemäßen Getrieberad sind die Lagerringe stirnseitig mit einem Kernelement verbunden, so dass ein montagefreundliches einteiliges Bauteil zur Verfügung gestellt wird. Die Lagerringe sind axial beiderseits des Verzahnungsabschnitts angebracht, und haben jeweils auf ihren vom Kernelement abgewandten Außenseiten, welche auch Außenseiten des Getrieberads bilden, jeweils eine Lagerfläche. Dabei sind die Lagerringe erfindungsgemäß so miteinander verbunden, dass eine in axialer Richtung auf die Lagerflächen eingeleitete Kraft von dem einen Lagerring auf den anderen Lagerring übertragen wird, ohne dass das Kernelement durch die Kraft zwischen den Lagerringen belastet wird. Mit anderen Worten wird das Kernelement beim Einwirken einer axialen Kraft, beispielsweise beim Aufbringen einer axialen Spannkraft zum spielfreien Einstellen der Lager, zwischen den Lagerringen in Achsrichtung belastungsarm gehalten. Dabei kann der axiale Kraftfluss zwischen den Lagerringen dadurch hergestellt werden, dass sich die beiden Lagerringe gegenseitig kontaktieren und axial direkt gegeneinander abstützen, oder mittelbar, wobei zwischen den beiden Lagerringen ein Kraftübertagungselement angeordnet sein kann, welches ebenfalls keine Kraft in axialer Richtung auf das Kernelement überträgt. Die Kraftübertragung in axialer Richtung erfolgt jedenfalls ohne Zwischenschaltung des Kernelements über die durch die Lagerringe gebildete, steife Struktur zur Kraftübertragung bzw. -durchleitung unabhängig vom Kernelement. Die beiden Lagerringe können auch als einstückiges integrales Bauteil ausgebildet sein.

Die Lagerflächen werden zwischen Außenlagerflächen einer Lageranordnung angeordnet. Jeweils eine Außenlagerfläche, die üblicherweise an einem Außenring angeordnet ist, liegt dabei axial einer Lagerfläche gegenüber, so dass sich zwischen Außenlagerfläche und Lagerfläche der Lagerspalt befindet. Dadurch, dass die Außenlagerflächen axial gegeneinander verstellt werden, kann der Abstand zu den Lagerflächen und damit das Lagerspiel eingestellt werden, und es kann eine axiale Kraft aufgebracht werden, um die Lagerflächen zwischen den Außenlagerflächen spielfrei zu verspannen.

Die auf die Lagerringe einwirkenden axialen Kräfte werden durch die erfindungsgemäße gegenseitige Abstützung in einem axialen Kraftfluss an dem Kernelement vorbei übertragen. eine axial auf die Lagerflächen ausgeübte Last wird durch die erfindungsgemäße Struktur zwischen den Lagerringen abgefangen und dadurch von dem Kernelement abgehalten. Dadurch, dass sich kein Material des Kernelements im axialen Kraftfluss befindet, wird es nicht durch die beim Verspannen des Lagers und die im Betrieb auftretenden Kräfte belastet.

Dadurch ergibt sich die Möglichkeit, die Materialien der Lagerringe und des Kernelements im Hinblick der im Betrieb geforderten Eigenschaften unabhängig voneinander zu optimieren. Die Lagerringe können bevorzugt aus einem harten, auf Druck unnachgiebigen Material bestehen, welches eine starre und belastbare axiale Verbindung ermöglicht, die zur Aufnahme der auf die Lagerfläche wirkenden Kräfte geeignet ist, und bevorzugt eine integrierte Ausbildung von Gleitlagerflächen oder Wälzkörperlaufbahnen ermöglicht. Diese Anforderungen können beispielsweise durch Stahl gut erfüllt werden. Das Kernelement kann hingegen aus einem weicheren Werkstoff bestehen, beispielsweise aus weicheren Metalllegierungen, wie beispielsweise Messing, oder Kunststoff. Insbesondere Kunststoffe können hinsichtlich ihrer Eigenschaften an die jeweiligen Anforderungen optimiert werden, beispielsweise bezüglich Elastizität und Gleiteigenschaften zur Realisierung spielarmer und laufruhiger Getriebe und Spindeltriebe. Die Eigenschaft von derartigen Kunststoffmaterialien, unter Druck zu fließen und sich plastisch zu verformen, ist bei der erfindungsgemäßen Gestaltung eines Getrieberads nicht maßgeblich, weil potentiell schädliche Kräfte von den sich gegenseitig abstützenden Lagerringen aufgenommen werden, und somit eine unerwünschte Verformung des in axialer Richtungen zwischen den Lagerringen angeordneten Kernelements praktisch ausgeschlossen wird. Dadurch wird eine größere Gestaltungsfreiheit als im Stand der Technik im Hinblick auf die Kombination unterschiedlicher Materialien für die Lagerringe und das Kernelement ermöglicht.

Die Lagerringe können fest, bevorzugt unlösbar mit dem Kernelement verbunden sein, beispielsweise durch stoffschlüssige Verbindung wie Verschweißen oder Verkleben, oder Einbetten bzw. Umspritzen. Dadurch kann das Getrieberad als einteiliges, montagefreundliches Bauteil bereitgestellt werden.

Die Lagerringe sind bevorzugt auf beiden axialen Stirnseiten des Kernelements angebracht, wobei die Lagerflächen vom Kernelement aus gesehen axial nach außen gerichtet sind, beispielsweise als im Wesentlichen kreisringförmige oder konische Lagerflächen. In einer Lageranordnung stehen die Lagerflächen in Gleitkontakt, oder über Wälzkörper in Wälzkontakt mit korrespondierenden, axial beiderseits des Getrieberads angeordneten Außenlagerflächen. Dabei können durch konische Lagerflächen, die auch mit schräg zur Achse liegenden Wälzkörperlaufbahnen versehen sein können, Schräglager realisiert werden, welche gleichzeitig eine optimierte radiale und axiale Lagerung und Abstützung ermöglichen.

Die Lagerringe können zunächst als zwei separate Bauteile bereitgestellt werden, die in dem Getrieberad mit dem Kernelement zusammengefügt werden, so dass sie in axialer Richtung direkt oder mittelbar zur axialen Kraftübertragung miteinander verbunden werden. Die Kraftübertragung kann im direkten Kontakt erfolgen, oder über dazwischen angeordnete Kraftübertragungselemente, welche jedoch keine Kraft in axialer Richtung in das Kernelement einleiten.

Es kann vorgesehen sein, dass die zwei Lagerringe zusammen einstückig ausgebildet sind. Dabei sind beide Lagerringe an einem einteiligen integralen Lagerringelement ausgebildet. Ein derartiges Lagerringelement kann beispielsweise hülsen- oder trommelförmig ausgestaltet sein, wobei sich die Lagerflächen im Bereich der axialen Stirnseiten befinden. Die Lagerflächen sind in axialer Richtung über das Lagerringelement einstückig durchgehend miteinander verbunden. Der Kraftfluss bei einer axialen Belastung erfolgt folglich durch das durchgehende Material des Lagerringeelements. Es ist ebenfalls denkbar und möglich, zunächst separate Lagerringe zu fertigen, und diese in einem weiteren Schritt zu einem Lagerringelement miteinander zu verbinden, bevor die Verbindung mit dem Kernelement erfolgt.

Die Lagerung des Getrieberads kann in Wälzlagern erfolgen, wobei die Lagerflächen der Lagerringe Wälzkörperlaufbahnen aufweisen, bevorzugt Kugellaufbahnen. Die den Lagerringen zugeordneten, axial gegenüberliegenden Außenlagerflächen haben ebenfalls entsprechende Kugellaufbahnen, und zwischen den Kugellaufbahnen sind als Wälzkörper Kugeln abrollbar angeordnet. In dieser Ausführung bilden die Lagerringe Innenringe von Wälzlagern, bevorzugt mit schräg zur Achse liegenden Lagerflächen bzw. Kugellaufbahnen, so dass Schrägkugellager gebildet werden, welche die Aufnahme von Lagerlasten in axialer und radialer Richtung bei einem kompakten Aufbau ermöglichen. Bevorzugt sind die Lagerflächen so ausgebildet, dass das Getrieberad mittels einer X-Lagerung im Gehäuse gelagert ist.

Die Lagerringe und die Außenlagerflächen können auch aufeinander gleitende Gleitflächen aufweisen, so dass eine Gleitlageranordnung gebildet wird.

Es ist möglich, dass die Lagerringe als Blechformteile ausgebildet sind, bevorzugt aus Stahlblech. Derartige Blechformteile können als Press-Stanz-Teile rationell mit den geforderten Eigenschaften gefertigt werden. Es können einzelne Lagerringe als Lagerschalen zur Verfügung gestellt werden, welche jeweils eine Lagerfläche aufweisen, und die erfindungsgemäß miteinander und mit dem Kernelement verbunden werden. Beide Lagerringe können auch an einem einzigen Lagerringelement angeordnet sein, welches durch Verbindung von zwei Lagerringen erzeugt, oder als ein einstückiges Blechformteil aus einem einzigen Blechabschnitt gefertigt sein kann. Das Blechformteil kann integral eingeformte Laufbahnen für Wälzkörper, bevorzugt Kugellaufbahnen aufweisen, die hinreichend hart ausgestaltet sein können, beispielsweise auch mittels durchgehender oder partieller Härtung oder Hartbeschichtung. Die Verbindung der Laufbahnen erfolgt durch einstückig durchgehende Blechabschnitte.

Alternativ ist es ebenfalls denkbar und möglich, dass die Lagerringe als Kaltfliesspressteil oder als selektives Laserschmelzbauteil ausgebildet ist.

Eine vorteilhafte Ausführungsform sieht vor, dass der Verzahnungsabschnitt und/oder die Spindelmutter und/oder ein Verbindungsstück integral einstückig mit dem Kernelement ausgebildet ist. Das Kernelement kann aus Materialien gefertigt sein, welche aufgrund ihrer Materialeigenschaften gut geeignet sind zum Einsatz als Getriebeelemente. Beispielsweise sind Kunststoffe gut geeignet zur Bereitstellung laufruhiger und verschließarmer Verzahnungen und Gewindetriebe. Erfindungsgemäß kann die Verzahnung zum Antriebseingriff mit der Antriebseinheit in das aus Kunststoff bestehende Kernelement eingeformt sein, und - in einem Tauchspindelantrieb mit drehend antreibbarer Spindelmutter - kann das Innengewinde der Spindelmutter in das aus Kunststoff bestehenden Kernelement eingeformt sein. Bei einem Rotationsspindelantrieb kann das Kernelement ebenfalls eine einstückig im Kunststoff eingeformte Verzahnung aufweisen, und ein Verbindungsstück zur drehfesten Verbindung des Getrieberads mit der Gewindespindel.

Es ist vorteilhaft, dass das Kernelement als Kunststoff-Spritzgussteil ausgebildet ist. Die Fertigung im Spritzgussverfahren aus thermoplastischen Kunststoffen, beispielsweise Polypropylen (PP), Polyoxymethylen (POM) oder dergleichen, ist rationell und ermöglicht eine flexible Formgebung, auch im Hinblick auf die Ausbildung der Verzahnung oder des Innengewindes. Gegebenenfalls kann der Kunststoff mit einer Bewehrung versehen sein, beispielsweise durch Zusatz von Bewehrungsfasern, um die Festigkeit zu erhöhen.

Die Fertigung des Kernelements als Kunststoff-Spritzgussteil ermöglicht eine besonders vorteilhafte Verbindung mit den Lagerringen dadurch, dass das Kernelement an die Lagerringe angespritzt ist. Dabei werden die Lagerringe in der Kavität eines Spritzgusswerkzeugs angeordnet und von dem darin eingespritzten schmelzflüssigen Kunststoff zumindest teilweise umschlossen, so dass sie nach des Auskühlen stoffschlüssig mit dem Kunststoff des Kernelements verbunden sind. Eine besonders feste Verbindung kann dadurch erreicht werden, dass die Lagerringe mit dem Kernelement stoff- und formschlüssig verbundene Formschlusselemente aufweisen. Die Formschlusselemente können beispielsweise Durchbrechungen und/oder Vorsprünge und/oder eine Rändelung des oder der Lagerringe aufweisen, die beim Spritzen des Kernelements von dem Kunststoffmaterial durchdrungen und darin eingebettet werden. Nach dem Auskühlen sind dadurch die Lagerringe, oder ein beide Lagerringe aufweisendes Lagerringelement über die Formschlusselemente unlösbar fest form- und stoffschlüssig in dem Kernelement verankert. Dadurch können die Verzahnung, das Innengewinde und/oder ein Verbindungsstück langfristig sicher und positionsgenau mit den Lagerringen verbunden werden. Die Fomschlusselemente können auch bei einem nicht als Spritzgussteil gefertigten Kernelement dazu dienen, eine formschlüssige Verbindung zwischen dem Kernelement und einem oder beiden Lagerringen zu erzeugen.

In einem erfindungsgemäßen Verstellantrieb können die Lagerringe zwischen korrespondierenden Außenlagerringen einer Lageranordnung verspannt sein. Zwischen den Außenlagerringen ist das Getrieberad über die Lagerflächen der Lagerringe drehbar gelagert. Zur Einstellung und Minimierung des Lagerspiels können die Außenlagerringe in axialer Richtung gegeneinander, und damit gegen die jeweils korrespondierenden Lagerringe bewegt und mit einer Vorspannkraft angepresst werden. Die Vorspannkraft kann durch elastische Vorspannelemente erzeugt werden, die sich an einem festen Widerlager, beispielsweise einem Lagergehäuse in axialer Richtung abstützen. Je nach Ausführung der Lenksäule kann das Widerlager in Achsrichtung fest an der Stelleinheit, der Trageinheit oder einer mit der Trageinheit verbundenen Manteleinheit angebracht sein. Ein derartiges Vorspannelement kann ein Federelement aufweisen, beispielsweise eine Teller- oder Wellfeder, oder auch ein Elastomerelement in Form eines Gummirings oder dergleichen.

### Beschreibung der Zeichnungen

Vorteilhafte Ausführungsformen der Erfindung werden im Folgenden anhand der Zeichnungen näher erläutert. Im Einzelnen zeigen:
- Figur 1: eine schematische perspektivische Ansicht einer erfindungsgemäßen Lenksäule,
- Figur 2: eine weitere perspektivische Ansicht der erfindungsgemäßen Lenksäule gemäß Figur 1 aus einem anderen Betrachtungswinkel,
- Figur 3: einen Längsschnitt entlang der Gewindespindelachse durch eine Verstelleinrichtung einer Lenksäule gemäß Figur 1 und 2 in einer perspektivischen Ansicht,
- Figur 4: einen Längsschnitt wie in Figur 3 in Seitenansicht,
- Figur 5: eine auseinandergezogene Darstellung des Spindeltriebs gemäß Figuren 3 und 4,
- Figur 6: einen Längsschnitt durch die Lageranordnung eines Spindeltriebs wie in Figur 4 bei der Einstellung der Lageranordnung,
- Figur 7: eine zweite Ausführung einer Verstelleinrichtung in einer Ansicht wie in Figur 4,
- Figur 8: eine dritte Ausführung einer Verstelleinrichtung in einer Ansicht wie in Figur 4,
- Figur 9: eine vierte Ausführung einer Verstelleinrichtung in einer Ansicht wie in Figur 4,
- Figur 10: eine fünfte Ausführung einer Verstelleinrichtung in einer Ansicht wie in Figur 4.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

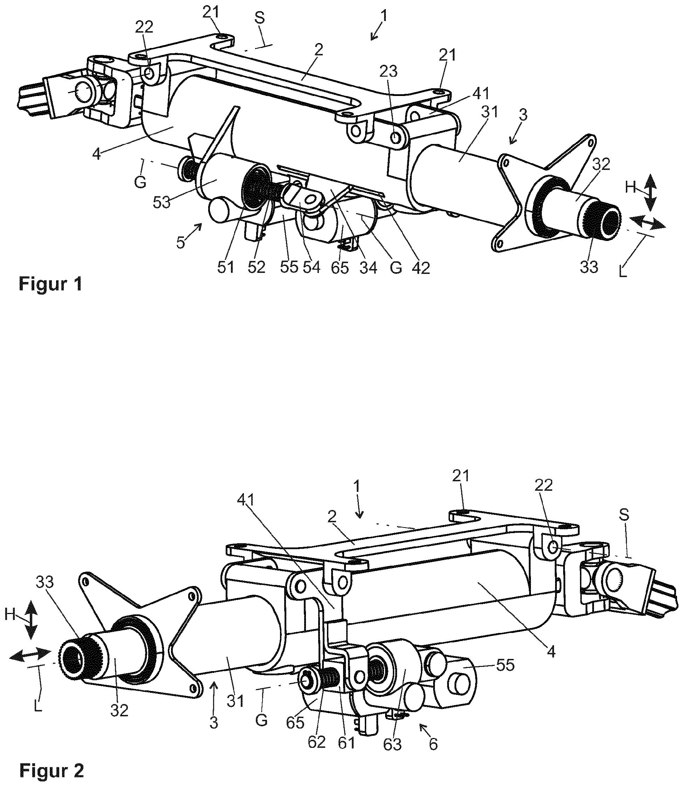

Figur 1 zeigt eine erfindungsgemäße Lenksäule 1 in einer schematischen perspektivischen Ansicht von oben rechts schräg auf das hintere Ende, bezogen auf die Fahrtrichtung eines nicht dargestellten Fahrzeugs, wo ein hier nicht dargestelltes Lenkrad im Bedienungsbereich gehalten wird. Figur 2 zeigt die Lenksäule 1 in einer Ansicht von der gegenüberliegenden Seite, also von oben rechts gesehen.

Die Lenksäule 1 umfasst eine Trageinheit 2, welche als Konsole ausgebildet ist, die Befestigungsmittel 21 in Form von Befestigungsbohrungen aufweist, zur Anbringung an einer nicht dargestellten Fahrzeug-Karosserie. Von der Trageinheit 2 wird eine Stelleinheit 3 gehalten, die in einer Manteleinheit 4 - auch als Führungskasten oder Kastenschwinge bezeichnet - aufgenommen ist.

Die Stelleinheit 3 weist ein Mantelrohr 31 auf, in dem eine Lenkspindel 32 um eine Längsachse L drehbar gelagert ist, die sich axial in Längsrichtung, d.h. in Richtung der Längsachse L, erstreckt. Am hinteren Ende ist an der Lenkspindel 32 ein Befestigungsabschnitt 33 ausgebildet, an dem ein nicht dargestelltes Lenkrad anbringbar ist.

Die Stelleinheit 3 ist zur Realisierung einer Längsverstellung in der Manteleinheit 4 in Richtung der Längsachse L teleskopartig verschiebbar aufgenommen, um das mit der Lenkspindel 32 verbundene Lenkrad relativ zur Trageinheit 2 in Längsrichtung vor und zurück positionieren zu können, wie mit dem Doppelpfeil parallel zur Längsachse L angedeutet.

Die Manteleinheit 4 ist um eine quer zur Längsachse L liegende, horizontale Schwenkachse S verschwenkbar in einem Schwenklager 22 an der Trageinheit 2 gelagert. Im hinteren Bereich ist die Manteleinheit 4 über einen Stellhebel 41 mit der Trageinheit 2 verbunden. Durch eine Drehbewegung des Stellhebels 41 mittels eines dargestellten Stellantriebs 6 (siehe Figur 2) kann die Manteleinheit 4 relativ zur Trageinheit 2 um die im Einbauzustand waagerecht liegende Schwenkachse S verschwenkt werden, wodurch eine Verstellung eines an dem Befestigungsabschnitt 33 angebrachten Lenkrads in Höhenrichtung H vorgenommen werden kann, was mit dem Doppelpfeil angedeutet ist.

Ein erster Verstellantrieb 5 zur Längsverstellung der Stelleinheit 3 relativ zur Manteleinheit 4 in Richtung der Längsachse L weist einen Spindeltrieb mit einer Spindelmutter 51 mit einem sich längs einer Achse G erstreckenden Innengewinde 74 auf, in die eine Gewindespindel 52 eingreift, die also mit ihrem Außengewinde in das korrespondierende Innengewinde 74 der Spindelmutter 51 eingeschraubt ist. Die Gewindespindelachse der Gewindespindel 52 ist identisch mit der Achse G und verläuft im Wesentlichen parallel zur Längsachse L.

Die Spindelmutter 51 ist um die Achse G drehbar in einem Lagergehäuse 53 gelagert, welches fest mit der Manteleinheit 4 verbunden ist. In Richtung der Achse G ist die Spindelmutter 51 axial über das Lagergehäuse 53 an der Manteleinheit 4 abgestützt, wie weiter unten noch näher erläutert wird.

Die Gewindespindel 52 ist mit einem an ihrem hinteren Ende ausgebildeten Befestigungselement 54 über ein Übertragungselement 34 mit der Stelleinheit 3 verbunden, und zwar fest in Richtung der Achse G bzw. der Längsachse L und feststehend bezüglich Drehung um die Achse G. Durch die drehend antreibbare Spindelmutter 51 und die bezüglich Drehung feststehende Gewindespindel 52 wird ein sogenannter Tauchspindelantrieb realisiert.

Dass Übertragungselement 34 erstreckt sich von der Stelleinheit 3 durch eine schlitzförmige Durchgangsöffnung 42 in der Manteleinheit 4. Zur Verstellung der Lenksäule 1 in Längsrichtung kann das Übertragungselement 34 frei in der Durchgangsöffnung 42 in Längsrichtung entlangbewegt werden.

Der Verstellantrieb 5 weist einen elektrischen Stellmotor 55 auf, von dem die Spindelmutter 51 bezüglich der Achse G relativ zur feststehenden Gewindespindel 52 drehend antreibbar ist. Dadurch kann - je nach Drehrichtung des Stellmotors 55 - die Gewindespindel 52 in Richtung der Achse G translatorisch relativ zur Spindelmutter 51 verlagert werden, so dass entsprechend die mit der Gewindespindel 52 verbundene Stelleinrichtung 3 relativ zu der mit der Spindelmutter 51 verbundenen Manteleinheit 4 in Richtung der Längsachse L verstellt wird. Der Antrieb der Spindelmutter 51 sowie die Abstützung der Spindelmutter 51 in Richtung der Achse G an der Manteleinheit 4 wird weiter unten noch detailliert erläutert.

In Figur 2, welche eine perspektivische Ansicht der Lenksäule 1 von der in Figur 1 hinten liegenden Seite zeigt, ist erkennbar, wie ein zweiter Verstellantrieb 6 zur Verstellung in Höhenrichtung H an der Lenksäule 1 angebracht ist. Dieser Verstellantrieb 6 umfasst eine Spindelmutter 61, in deren Innengewinde 74 längs einer Achse G eine Gewindespindel 62 eingreift. Die Gewindespindel 62 ist in einem Lagergehäuse 63, welches an der Manteleinheit 4 befestigt ist, drehbar um die Achse G gelagert und axial, in Richtung der Achse G, an der Manteleinheit 4 abgestützt, und von einem elektrischen Stellmotor 65 wahlweise in beide Rotationsrichtungen um die Achse G drehend antreibbar. Dies wird weiter unten noch im Detail erläutert.

Die Spindelmutter 61 ist bezüglich einer Drehung um die Achse G feststehend an einem Ende des zweiarmigen Stellhebels 41 angebracht, der um ein Schwenklager 23 drehbar an der Trageinheit 22 gelagert ist, und dessen anderer Arm mit dem anderen Ende mit der Manteleinheit 4 verbunden ist.

Durch Drehung der Gewindespindel 61 kann - je nach Drehrichtung des Stellmotors 65 - die Spindelmutter 61 in Richtung der Achse G translatorisch relativ zur Gewindespindel 62 verlagert werden, so dass entsprechend die über den Stellhebel 41 mit der Spindelmutter 41 verbundene Manteleinheit 4 samt der darin aufgenommenen Stelleinrichtung 3 relativ zu der Trageinheit 2 in Höhenrichtung H auf oder ab verstellt werden kann, wie mit dem Doppelpfeil angedeutet. Der Antrieb der Gewindespindel 62 sowie die Abstützung der Gewindespindel 62 in Richtung der Achse G an der Manteleinheit 4 wird im Folgenden noch näher erläutert.

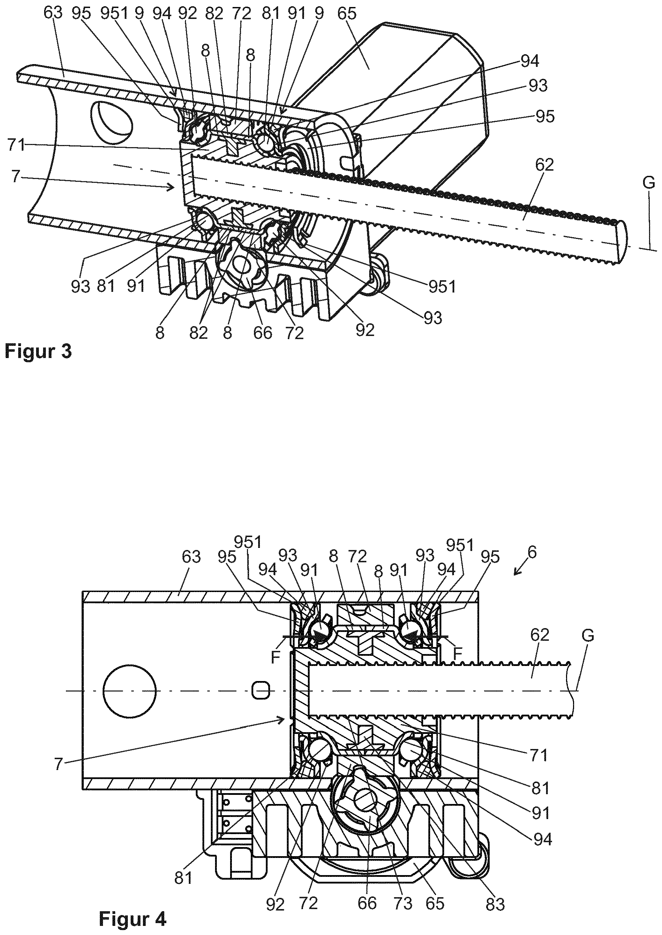

Figur 3 und Figur 4 stellen einen Längsschnitt durch das Lagergehäuse 63 des Verstellantriebs 6 entlang der Achse G in unterschiedlichen Ansichten dar.

Auf der Gewindespindel 62 ist drehfest bezüglich der Achse G ein erfindungsgemäß ausgestaltetes Getrieberad 7 befestigt. Das Getrieberad 7 weist ein aus Kunststoff gefertigtes Kernelement 71 auf, welches bevorzugt aus einem thermoplastischen Kunststoff wie PP, POM oder dergleichen als Kunststoff-Spritzgussteil hergestellt ist. An seinem äußeren Umfang weist das Getrieberad 7 am Kernelement 71 eine koaxial zur Achse G umlaufende Verzahnung 72 auf, die im dargestellten Beispiel als Schneckenverzahnung ausgebildet ist, so dass das Getrieberad 7 ein Schneckenrad bildet. In die Verzahnung 72 greift eine von dem Stellmotor 65 drehend antreibbare Schnecke 66 ein.

Das Kernelement 71 ist im Bereich eines zentralen Verbindungsabschnitts 73, der ein Verbindungsstück bildet, drehfest mit der Gewindespindel 62 verbunden. Die Verbindung kann beispielsweise stoffschlüssig ausgeführt sein, indem das Kernelement 71 an die Gewindespindel 62 im Spritzguss an die Gewindespindel 62 angespritzt ist. Zusätzlich oder alternativ kann eine formschlüssige und/oder andere Befestigung vorgesehen sein.

Mit dem Kernelement 71 sind Lagerringe 8 des Getrieberads 7 fest verbunden. Jeder Lagerring 8 weist eine als Kugellaufbahn ausgebildete, koaxial zur Achse G ringförmige Lagerfläche 81 auf. Die beiden Lagerflächen 81 laufen vom Kernelement 71 aus gesehen nach außen, stirnseitig konisch zusammen. Mit anderen Worten stehen die Kugellaufbahnen schräg zur Achse G.

Die Lagerringe 8 weisen axial in Richtung der Achse G gegeneinander gerichtete Stützabschnitte 82 auf, die im gezeigten Beispiel unmittelbar gegeneinander anliegen, so dass die Lagerringe 8 in Richtung der Achse G unmittelbar gegeneinander abgestützt sind. Insbesondere befindet sich kein Kunststoffmaterial des Kernelements 71 zwischen den miteinander in Kontakt stehenden Stützabschnitten 82 der Lagerringe 8.

Die Lagerringe 8 sind bevorzugt als Blechformteile ausgebildet, besonders bevorzugt als Press-Stanz-Teile aus Stahlblech. Zu Verbindung mit dem Getrieberad 7 sind die Lagerringe 8 von dem Kunststoff des Kernelements 71 umspritzt, und ist so bis auf die stirnseitig nach außen frei liegenden Lagerflächen 81 stoff- und formschlüssig in das Kernelement 71 eingebettet. Optional kann ein Fixierelement 83 vorgesehen sein, an dem die beiden Lagerringe 8 während des Umspritzens mit Kunststoff relativ zueinander positioniert und gehalten werden, so dass sie axial in Richtung der Achse G gegeneinander anliegen. Das Fixierelement 83 kann aber auch weggelassen werden. Alternativ ist es auch denkbar, die Lagerringe 8 vor dem Umspritzen direkt miteinander zu verbinden, beispielsweise durch eine Punktverschweißung oder dergleichen.

Die Lagerflächen 81 bilden die Innenringe einer Wälzlageranordnung 9, welche Kugeln 91 umfasst, die in einem Kugelkäfig 92 drehbar gehalten werden und im axialen Lagerspalt zwischen den besagten Kugellaufbahnen der Lagerflächen 81 und korrespondierenden Kugellaufbahnen in Außenlagerringen 93 abrollbar angeordnet sind. Die Außenlagerringe 93 sind, vom Getrieberad 7 aus gesehen auf beiden Stirnseiten, axial nach außen über elastische Federelemente 94, die Vorspannelemente bilden, im gezeigten Beispiel Elastomer- oder Gummiringe, gegen axiale Widerlager in Form von Sicherungsringen 95 abgestützt, die ihrerseits in axialer Richtung der Achse G feststehend mit dem Lagergehäuse 53 verbunden sind, beispielsweise durch Verkeilen, Verstemmen oder Verklemmen. Das Federelement 94 kann ebenfalls als Wellfeder oder Tellerfeder ausgebildet sein.

In der in Figur 4 dargestellten Ausführung sind auf beiden Stirnseiten des Getrieberads 7 als Vorspannelemente ausgebildete Federelemente 94 angeordnet, welche sich über die beiden Sicherungsringe 95 axial an dem Lagergehäuse 63 abstützen und axial elastisch verspannt sind. Dabei wirkt die Federkraft als Vorspannkraft F über die Außenlagerringe 93, die Kugeln 91 auf die Lagerflächen 81, so dass das Getrieberad 7 zwischen den Wälzlageranordnungen 9 axial vorgespannt ist.

Zur Fixierung können die Sicherungsringe 95 an ihrem Außenumfang Befestigungsmittel 951 aufweisen, beispielsweise abschnittsweise oder vollständig umlaufende, nach außen vorstehende Schneidenkanten, die sich formschlüssig plastisch in die Innenwandung des Lagergehäuses 63 eingraben. Bevorzugt sind die Schneidenkanten gegen die Achse G geneigt, so dass die Befestigungsmittel 951 widerhakenartig ausgebildet sind. Dadurch können die Sicherungsringe 95 in dem Lagergehäuse 63 axial nur in Richtung gegen das Getrieberad 7 bewegt werden. Durch die im montierten Zustand wirkende Vorspannkraft F werden die Sicherungsringe 95 entgegengesetzt belastet, wobei durch die Befestigungsmittel 951 durch ihre widerhakenförmige Ausbildung in der Innenwandung des Lagergehäuses 63 festkrallen. Mit anderen Worten sind die Sicherungsringe 95 selbstfixierend ausgebildet.

Bei der Montage der Wälzlageranordnung 9 wird zur Vermeidung von Lagerspiel in Richtung der Achse G eine axiale Vorspannkraft F aufgebracht. Diese wird von den Sicherungsringen 95, den als Vorspannelemente ausgebildeten Federelementen 94, und die Kugeln 91 auf die Lagerflächen 81 der Lagerringe 8 auf die Lagerringe 8 aufgebracht, wie in Figur 4 mit den Kraftpfeilen eingezeichnet. Die Vorspannkraft F wird während der gesamten Lebensdauer durch die als Vorspannelemente dienenden elastischen Federelemente 94 aufrecht gehalten. Dadurch werden die beiden Lagerringe 8 axial gegeneinander angepresst, wobei die auf die Lagerflächen 81 im Betrieb einwirkende Kraft F vollständig im Kraftfluss durch die Lagerringe 8 übertragen wird. Dabei ist insbesondere vorteilhaft, dass sich das Kunststoffmaterial des Kernelements 71 nicht im Kraftfluss zwischen den Lagerringen 8 befindet, also nicht auf Druck beansprucht wird. Durch diese Entlastung wird sichergestellt, dass das Kunststoffmaterial nicht durch Fließen plastisch deformiert wird.

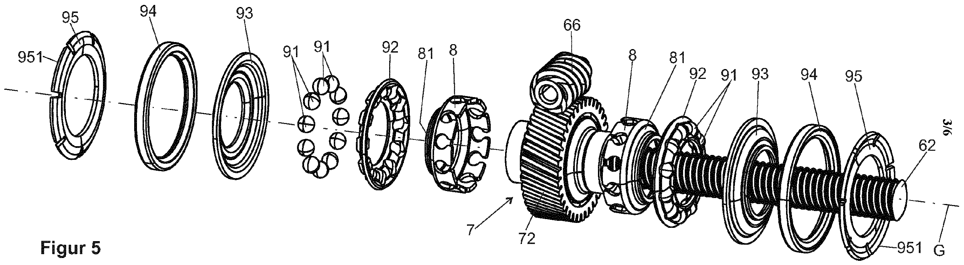

In Figur 5 sind die Einzelteile des Getrieberads 7 und der Wälzlageranordnung 9 in einer Explosionsdarstellung in Richtung der Achse G auseinander gezogen dargestellt.

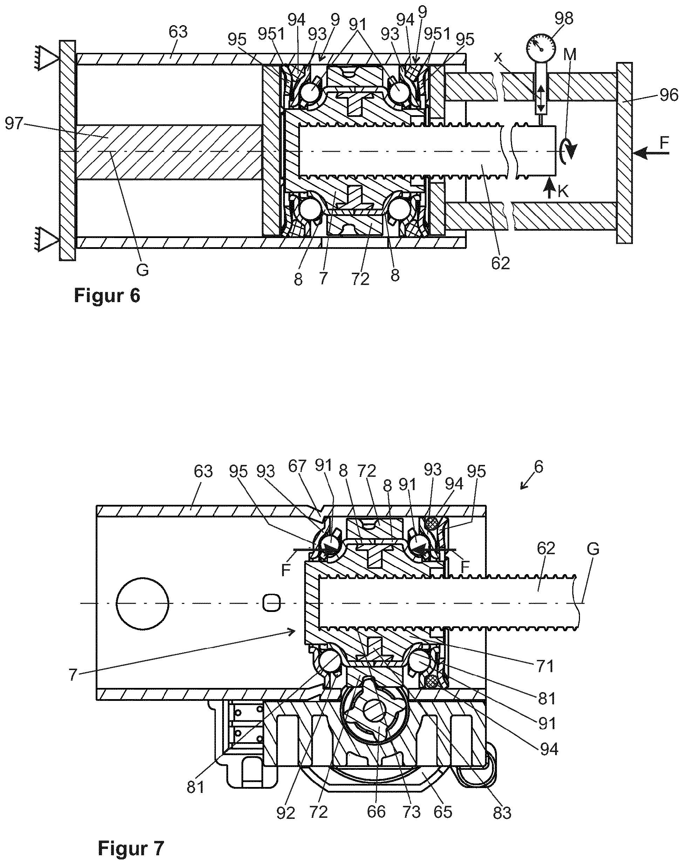

Figur 6 zeigt einen Verstellantrieb 6 bei der Einstellung in einer Einstelleinrichtung, die einen axial bewegbaren Druckstempel 96 und ein relativ dazu feststehendes Widerlager 97 umfasst. Mittels einer nicht dargestellten Kraftquelle kann der Druckstempel 96 mit einer Vorspannkraft F beaufschlagt werden, die somit als Einpresskraft dient.

Zur Einstellung der Wälzlageranordnungen 9 wird der eine, in Figur 6 links liegende Sicherungsring 95 an dem Widerlager 97 axial abgestützt, während durch den Druckstempel 96 der andere, in der Zeichnung rechts liegende Sicherungsring 95 mit der Vorspannkraft F axial in Richtung gegen das Getrieberad 7 angedrückt wird. Dabei wird der Sicherungsring 95 durch die oben beschriebene widerhakenförmige Ausbildung der Befestigungsmittel 951 zunächst bis gegen das Federelement 94 verschoben. Beim Kontakt wird das Federelement 94 durch die Vorspannkraft F axial komprimiert, und die Vorspannkraft F in die Wälzlageranordnung eingeleitet.

Der Betrag der Vorspannkraft F, mit welcher das Getrieberad 7 in der Wälzlageranordnung 9 vorgespannt wird, kann in Abhängigkeit von einem Durchdrehmoment M erfolgen, welches aufgewendet werden muss, um das Getrieberad 7 zu drehen. Hierzu wird das Getrieberad 7 drehend angetrieben, beispielsweise durch den Verstellmotor 66 der Antriebseinheit. Alternativ kann bei einem Rotationsspindelantrieb, gemäß Figur 3, 4, 6, 7 oder 8, bei dem die Gewindespindel 62 drehfest mit dem Getrieberad 7 verbunden ist, der Antrieb durch einen nicht dargestellten externen Einstellantrieb erfolgen, der die Gewindespindel 62 drehend antreibt.

Das Durchdrehmoment M kann mittels geeigneter Sensoren gemessen werden, beispielsweise über Drehmomentsensoren, oder über einen Motorstrom des Stellmotors 65 oder eines externen Einstellantriebs.

Während des drehenden Antriebs wird die axiale Vorspannkraft F durch den Druckstempel 96 auf die Lageranordnung ausgehend von einem vorgegebenen Startwert aufgebracht und kontinuierlich oder schrittweise erhöht, und dabei bevorzugt mittels geeigneter Kraftsensoren gemessen. Dadurch steigt die Lagerreibung an, und das mit der Vorspannkraft F korrelierte, gemessene Durchdrehmoment M steigt ebenfalls an.

Das gemessene Durchdrehmoment M wird bevorzugt automatisiert mit einem vorgegebenen Drehmomentzielwert verglichen.

Wenn das gemessene Durchdrehmoment M kleiner ist als der vorgegebene Drehmomentzielwert, bedeutet dies, dass das Lagerspiel noch zu groß ist, beziehungsweise die Vorspannung noch zu gering ist, so dass die erforderliche Steifigkeit der Lageranordnung und ein spielfreier Lauf unter Lastbedingungen im Betrieb noch nicht gewährleistet ist. In diesem Fall wird die Vorspannkraft F erhöht, und das gemessene Durchdrehmoment M wird erneut gemessen und mit dem Drehmomentzielwert verglichen.

Die vorgenannten Schritte werden so oft durchlaufen, bis das gemessene Durchdrehmoment M als Lagerzustandsgröße den vorgegebenen Drehmomentzielwert als Zustandszielwert erreicht. In der dabei erreichten axialen Position, der Vorspannposition, wird der Sicherungsring 95 und damit das Federelement 94 relativ zum Lagergehäuse 63 fixiert. Die axiale Fixierung kann dadurch erfolgen, dass sich beim Entlasten bzw. Zurückfahren des Druckstempels 96 die widerhakenförmigen Befestigungsmittel 951 durch die von dem Federelement 94 ausgeübte Vorspannkraft F formschlüssig plastisch in die Innenwandung des Lagergehäuses 63 eingraben und dieses in der Vorspannposition sichern. Alternativ oder zusätzlich kann eine Fixierung durch stoffschlüssige Verbindung, beispielsweise Schweißen oder dergleichen erfolgen, oder mittels zusätzlich eingefügter Befestigungselemente.

Alternativ oder zusätzlich kann die Vorspannung abhängig von der Biegesteifigkeit des Verstellantriebs 6 eingestellt werden. Dazu wird die Lageranordnung durch ein Kippmoment K, welches quer in die Gewindespindel 62 eingebracht wird, auf Biegung belastet. Die dabei auftretende, mittels einer Wegmesseinrichtung 99 gemessene radiale Auslenkung x ist ein Maß für die Steifigkeit. Diese ist abhängig von der Vorspannkraft F, wobei eine hohe Vorspannkraft F mit einer geringen Auslenkung x und entsprechend einer hohen Steifigkeit korreliert ist.

Die Auslenkung x , die als korrelierende Lagerzustandsgröße dient, entspricht einer durch das Kippmoment, das als Belastungsmoment dient, erzeugten Verlagerung des Getrieberads 7, beispielsweise eine Verkippung im Lagergehäuse 63. Die gemessene Auslenkung x wird verglichen mit einer einem Steifigkeitsgrenzwert, der dem Zustandszielwert entspricht, zugeordneten Referenzwert einer maximalen zulässigen Verlagerung.

Solange die gemessene Auslenkung x größer ist als ein vorgegebener Steifigkeitsgrenzwert, ist die erforderliche Steifigkeit nicht gegeben. In diesem Fall wird die Vorspannkraft F erhöht, bis die gemessene Auslenkung x innerhalb vorgegebener Toleranzbereiche kleiner oder gleich dem Steifigkeitsgrenzwert ist.

Die Einstellung der Vorspannung kann durch Regelung auf das Durchdrehmoment M, oder das Kippmoment K erfolgen, oder auch unter Berücksichtigung beider Belastungsmomente M und K.

Die Einstellung der Vorspannung kann alternativ durch Regelung der aufgebrachten und gemessenen Vorspannkraft erfolgen, erreicht diese einen vorbestimmten Grenzwert, der sogenannte Zielvorspannkraft, wird das Vorspannelement fixiert und die Einstellung der Vorspannkraft beendet.

Figur 7 zeigt eine zweite Ausführungsform, bei der anstelle des einen Sicherungsrings 95 der in der Zeichnung links liegende Außenlagerring 93 axial gegen ein durch eine als Schulter ausgebildete Einformung des Lagergehäuses 63 gebildetes axiales Widerlager 67 abgestützt ist. Außerdem weist diese Ausführung nur ein Federelement 94 auf, welches als O-Ring aus gummielastischem Material ausgebildet ist, und in der Zeichnung rechts zwischen dem Außenlagerring 93 und dem Sicherungsring 95 angeordnet ist.

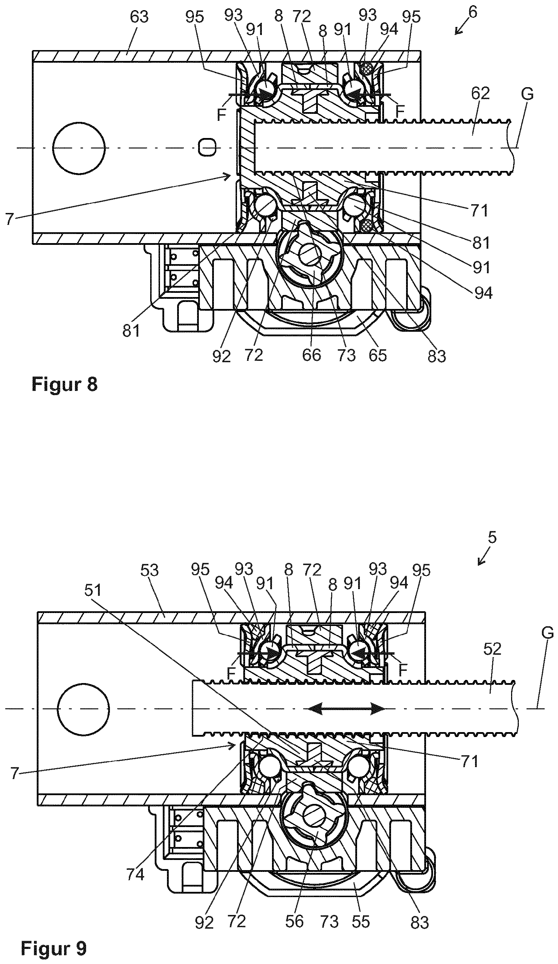

Figur 8 zeigt eine dritte Ausführung, welches wie die Ausführung gemäß Figur 6 zwei Sicherungsringe 95 aufweist, jedoch nur ein Federelement 94, welches wie in Figur 7 als O-Ring oder dergleichen elastisches Element ausgebildet ist.

Die vierte Ausführung gemäß Figur 9 ist hinsichtlich der Lagerung des Getrieberads 7 im Prinzip aufgebaut wie die in Figur 4 und 6 dargestellte Ausführung. Im Unterschied dazu handelt es sich dabei jedoch um einen Tauchspindelantrieb, bei dem die Gewindespindel 62 in ein Gewinde in der mit dem Getrieberad 7 verbundenen Spindelmutter 61 eingreift, d.h. nicht drehfest mit dem Getrieberad 7 verbunden ist.

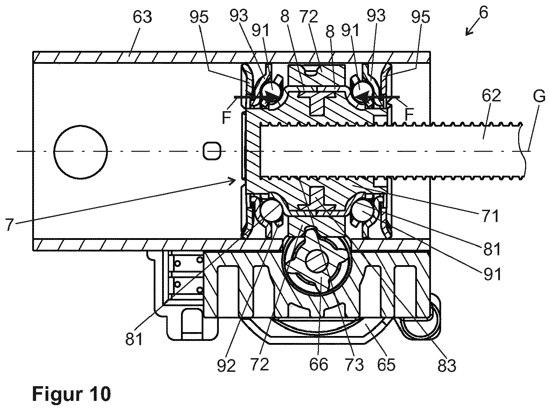

Die fünfte Ausführung gemäß Figur 10 zeichnet sich dadurch aus, dass zumindest einer der Sicherungsringe 95 in sich axial federelastisch ausgebildet ist, oder auch beide Sicherungsringe 95. Das erfindungsgemäße Vorspannelement ist gewissermaßen integriert ausgebildet in zumindest einem Sicherungsring 95.

Die Einstellung der in den Figuren 7, 8, 9 und 10 gezeigten Ausführungen kann wie zu Figur 6 beschrieben erfolgen.

## Patentansprüche

1. Verstellantrieb (5, 6) für eine motorisch verstellbare Lenksäule (1) für ein Kraftfahrzeug, umfassend eine in eine Spindelmutter (51, 61) eingreifende Gewindespindel (52, 62) mit einer Achse (G), eine Antriebseinheit (55, 65) und ein von der Antriebseinheit (55, 65) um die Achse (G) drehend antreibbares, drehfest mit der Spindelmutter (51) oder der Gewindespindel (62) verbundenes Getrieberad (7), welches in einem Lagergehäuse (53, 63) in einer Lageranordnung zwischen zwei axial an dem Lagergehäuse (53, 63) abgestützten Außenlagerringen (93) um die Achse (G) drehbar gelagert ist,
wobei die Außenlagerringe (93) auf ihren einander zugewandten Seiten jeweils eine koaxial zur Achse (G) umlaufende Außenlagerfläche aufweisen, welche jeweils einer an dem Getrieberad (7) stirnseitig ausgebildeten Lagerfläche (81) gegenüberliegt, wobei mindestens ein Außenlagerring (93) an dem Lagergehäuse (53, 63) über ein elastisches Vorspannelement (94, 95) axial federnd abgestützt ist, welches eine die beiden Außenlagerringe (93) axial gegeneinander verspannende Vorspannkraft (F) ausübt,
**dadurch gekennzeichnet,**
**dass** das Vorspannelement als einstückiges Sicherungselement (95) ausgebildet ist.

2. Verstellantrieb (5, 6) nach Anspruch 1, **dadurch gekennzeichnet, dass** das als einstückiges Sicherungselement (95) ausgebildete Vorspannelement (94) ein ringförmiges Federelement umfasst.

3. Verstellantrieb (5, 6) nach einem der vorangehenden Ansprüche, **dadurch gekennzeichnet, dass** das als einstückiges Sicherungselement (95) ausgebildete Vorspannelement (94) am mit dem Lagergehäuse (63) verbundenen Sicherungselement (95) abgestützt ist.

4. Verstellantrieb (5, 6) nach einem der vorangehenden Ansprüche, **dadurch gekennzeichnet, dass** zwischen dem Getrieberad (7) und den Außenlagerringen (93) Wälzkörper (91) angeordnet sind.

5. Verstellantrieb (5, 6) nach einem der vorangehenden Ansprüche, **dadurch gekennzeichnet, dass** ein Außenlagerring (93) an dem Lagergehäuse (53, 63) an einem Widerlager (97) axial starr abgestützt ist.

6. Verstellantrieb (5, 6) nach einem der vorangehenden Ansprüche, **dadurch gekennzeichnet, dass** das Lagergehäuse (63) einen hohlzylindrischen Aufnahmeraum aufweist, in dem die Außenlagerringe (93) und das Getrieberad (7) koaxial zur Achse (G) angeordnet sind.

7. Verstellantrieb (5, 6) nach Anspruch 6, **dadurch gekennzeichnet, dass** das Sicherungselement (95) Befestigungsmittel (951) zur Fixierung innen in dem Aufnahmeraum aufweist.

8. Motorisch verstellbare Lenksäule (1) für ein Kraftfahrzeug, mit einer Trageinheit (2), die an einer Fahrzeugkarosserie anbringbar ist, und von der eine Stelleinheit (3) gehalten ist, in der eine Lenkspindel (32) um eine Längsachse (L) drehbar gelagert ist, und mit einem Verstellantrieb (5, 6), der mit der Trageinheit (2) und mit der Stelleinheit (3) verbunden ist, und von dem die Stelleinheit (3) relativ zur Trageinheit (2) verstellbar ist, wobei der Verstellantrieb (5, 6) eine in eine Spindelmutter (51) eingreifende Gewindespindel (52, 62) mit einer Achse (G), eine Antriebseinheit (55, 65) und ein von der Antriebseinheit (55, 65) um die Achse (G) drehend antreibbares, drehfest mit der Spindelmutter (51) oder der Gewindespindel (62) verbundenes Getrieberad (7) umfasst, welches in einem Lagergehäuse (53, 63) in einer Lageranordnung zwischen zwei axial an dem Lagergehäuse (53, 63) abgestützten Außenlagerringen (93) um die Achse (G) drehbar gelagert ist, wobei die Außenlagerringe (93) auf ihren einander zugewandten Seiten jeweils eine koaxial zur Achse (G) umlaufende Außenlagerfläche aufweisen, welche jeweils einer an dem Getrieberad (7) stirnseitig ausgebildeten Lagerfläche (81) gegenüberliegt, **dadurch gekennzeichnet, dass** der Verstellantrieb (5, 6) ausgebildet ist gemäß zumindest einem der Ansprüche 1 bis 6.

9. Verfahren zur Einstellung einer Lageranordnung eines Verstellantriebs (5, 6) für eine motorisch verstellbare Lenksäule (1) für ein Kraftfahrzeug, umfassend eine in eine Spindelmutter (51, 61) eingreifende Gewindespindel (52, 62) mit einer Achse (G), und ein drehfest mit der Spindelmutter (51) oder der Gewindespindel (62) verbundenes Getrieberad (7), welches in einem Lagergehäuse (53, 63) in einer Lageranordnung zwischen zwei axial an dem Lagergehäuse (53, 63) abgestützten Außenlagerringen (93) um die Achse (G) drehbar gelagert ist, wobei ein Außenlagerring (93) an dem Lagergehäuse (53, 63) über ein elastisches Vorspannelement (94, 95) axial federnd abgestützt ist, wobei die Außenlagerringe (93) auf ihren einander zugewandten Seiten jeweils eine koaxial zur Achse (G) umlaufende Außenlagerfläche aufweisen, welche jeweils einer an dem Getrieberad (7) stirnseitig ausgebildeten Lagerfläche (81) gegenüberliegt,
umfassend
A) Aufbringen einer axialen Vorspannkraft (F) auf das Vorspannelement (94, 95), **gekennzeichnet durch** die Schritte:
B) Aufbringen eines Belastungsmoments (M, K) auf das Getrieberad (7) und Messen des Belastungsmoments (M, K),
C) Messen einer mit dem Belastungsmoment (M, K) korrelierten Lagerzustandsgröße (M, x),
D) Vergleichen der gemessenen Lagerzustandsgröße (M, x) mit einem vorgegebenen Zustandszielwert,
E) wenn die gemessene Lagerzustandsgröße (M, x) von dem Zustandszielwert abweicht: Verändern der axialen Vorspannkraft (F),
F) wenn die gemessene Lagerzustandsgröße (M, x) den Zustandszielwert erreicht: Fixieren des Vorspannelements (9) in axialer Vorspannposition am Lagergehäuse (63) und Beenden der Einstellung.

10. Verfahren nach Anspruch 9, **gekennzeichnet durch** die Schritte:
B1) Aufbringen eines Durchdrehmoments (M) als Belastungsmoment zum rotierendes Antreiben des Getrieberads (7) und dabei Messen des Durchdrehmoments (M) als korrelierende Lagerzustandsgröße,
C1) Vergleichen des gemessenen Durchdrehmoments (M) als Lagerzustandsgröße mit einem vorgegebenen Drehmomentzielwert als Zustandszielwert,
E1) wenn das gemessene Durchdrehmoment (M) als Lagerzustandsgröße kleiner ist als der vorgegebene Drehmomentzielwert als Zustandszielwert: Erhöhen der axialen Vorspannkraft (F),
F1) wenn das Durchdrehmoment (M) als Lagerzustandsgröße den vorgegebenen Drehmomentzielwert als Zustandszielwert erreicht: Fixieren des Vorspannelements (9) in axialer Vorspannposition am Lagergehäuse (63) und Beenden der Einstellung.

11. Verfahren nach Anspruch 9 oder 10, **gekennzeichnet durch** die Schritte:
B2) Aufbringen eines Kippmoments (K) als Belastungsmoment quer zur Achse (G) auf das Getrieberad (7) und dabei Messen einer Verlagerung (x) des Getrieberads (7) relativ zum Lagergehäuse (63) als korrelierende Lagerzustandsgröße,
C2) Vergleichen der gemessenen Verlagerung (x) als Lagerzustandsgröße mit einem vorgegebenen Steifigkeitsgrenzwert als Zustandszielwert,
E2) wenn die gemessene Verlagerung (x) als Lagerzustandsgröße größer ist als der vorgegebene Steifigkeitsgrenzwert als Zustandszielwert: Erhöhen der axialen Vorspannkraft (F),
F2) wenn die gemessene Verlagerung (x) als Lagerzustandsgröße den vorgegebenen Steifigkeitsgrenzwert als Zustandszielwert erreicht: Fixieren des Vorspannelements (9) in axialer Vorspannposition am Lagergehäuse und Beenden der Einstellung.

12. Verfahren nach einem der Ansprüche 9 bis 11, **dadurch gekennzeichnet, dass** beim Aufbringen der Vorspannkraft (F) ein Messen der Vorspannkraft (F) erfolgt.

13. Verfahren nach einem der Ansprüche 9 bis 12, **dadurch gekennzeichnet, dass** die Vorspannkraft (F) auf ein vor einem Außenlagerring (93) angeordnetes Sicherungselement (95) ausgeübt wird.

14. Verfahren nach Anspruch 13, **dadurch gekennzeichnet, dass** das Sicherungselement (95) in Richtung der Vorspannkraft (F) relativ zum Lagergehäuse (63) bewegbar ist, und entgegen der Vorspannkraft (F) am Lagergehäuse (93) selbstfixierend ausgebildet ist.

15. Verfahren zur Einstellung einer Lageranordnung eines Verstellantriebs (5, 6) für eine motorisch verstellbare Lenksäule (1) für ein Kraftfahrzeug, umfassend eine in eine Spindelmutter (51, 61) eingreifende Gewindespindel (52, 62) mit einer Achse (G), und ein drehfest mit der Spindelmutter (51) oder der Gewindespindel (62) verbundenes Getrieberad (7), welches in einem Lagergehäuse (53, 63) in einer Lageranordnung zwischen zwei axial an dem Lagergehäuse (53, 63) abgestützten Außenlagerringen (93) um die Achse (G) drehbar gelagert ist, wobei ein Außenlagerring (93) an dem Lagergehäuse (53, 63) über ein elastisches Vorspannelement (94, 95) axial federnd abgestützt ist, wobei die Außenlagerringe (93) auf ihren einander zugewandten Seiten jeweils eine koaxial zur Achse (G) umlaufende Außenlagerfläche aufweisen, welche jeweils einer an dem Getrieberad (7) stirnseitig ausgebildeten Lagerfläche (81) gegenüberliegt,
umfassend
A) Aufbringen einer axialen Vorspannkraft (F) auf das Vorspannelement (94, 95), **gekennzeichnet durch** die Schritte:
B) Messen der axialen Vorspannkraft (F),
D) Vergleichen der gemessenen Vorspannkraft (F) mit einer vorgegebenen Zielvorspannkraft,
E) wenn die gemessene Vorspannkraft (F) von der vorgegebenen Zielvorspannkraft abweicht: Verändern der axialen Vorspannkraft (F),
F) wenn die gemessene Vorspannkraft (F) die vorgegebene Zielvorspannkraft erreicht: Fixieren des Vorspannelements (9) in axialer Vorspannposition am Lagergehäuse (63) und Beenden der Einstellung.

## Claims

1. Adjustment drive (5, 6) for a steering column (1) that is adjustable by motor for a motor vehicle, comprising a threaded spindle (52, 62) with an axis (G), said threaded spindle engaging in a spindle nut (51, 61), a drive unit (55, 65) and a gearwheel (7) which is connected to the spindle nut (51) or the threaded spindle (62) for rotation therewith, which is driveable to rotate about the axis (G) by the drive unit (55, 65) and which is rotatably mounted about the axis (G) in a bearing housing (53, 63) in a bearing arrangement between two outer bearing rings (93) that are axially supported at the bearing housing (53, 63),
wherein the outer bearing rings (93) each have, on their sides facing one another, a circumferential outer bearing face that is coaxial to the axis (G), said outer bearing face in each case lying opposite a bearing face (81) embodied on the end side at the gear wheel (7),
wherein that at least one outer bearing ring (93) is supported in an axially resilient manner at the bearing housing (53, 63) by way of an elastic preloading element (94, 95), which exerts a preloading force (F) that axially braces the two outer bearing rings (93) against one another,
**characterized in that** the preloading element is embodied as an integral securing element (95).

2. Adjustment drive (5, 6) according to Claim 1, **characterized in that** the preloading element (94) comprises a ring-shaped spring element.

3. Adjustment drive (5, 6) according to any one of the preceding claims, **characterized in that** the preloading element (94) is supported at a securing element (95) that is connected to the bearing housing (63).

4. Adjustment drive (5, 6) according to any one of the preceding claims, **characterized in that** rolling bodies (91) are arranged between the gear wheel (7) and the outer bearing rings (93).

5. Adjustment drive (5, 6) according to any one of the preceding claims, **characterized in that** an outer bearing ring (93) is supported at the bearing housing (53, 63) at a counter bearing (97) in an axially rigid manner.

6. Adjustment drive (5, 6) according to any one of the preceding claims, **characterized in that** the bearing housing (63) comprises a hollow cylindrical receiving space, in which the outer bearing rings (93) and the gear wheel (7) are arranged coaxially in relation to the axis (G).

7. Adjustment drive (5, 6) according to Claim 6, **characterized in that** the securing element (95) comprises fastening means (951) for affixment inside the receiving space.

8. Steering column (1) that is adjustable by motor for a motor vehicle, comprising a carrying unit (2), which is attachable to a vehicle body, and which holds an actuating unit (3), in which a steering spindle (32) is rotatably mounted about a longitudinal axis (L), and comprising an adjustment drive (5, 6), which is connected to the carrying unit (2) and to the actuating unit (3), and by means of which the actuating unit (3) is adjustable relative to the carrying unit (2), wherein the adjustment drive (5, 6) comprises a threaded spindle (52, 62) with an axis (G), said threaded spindle engaging in a spindle nut (51), a drive unit (55, 65) and a gear wheel (7) which is connected to the spindle nut (51) or the threaded spindle (62) for rotation therewith, which is driveable to rotate about the axis (G) by the drive unit (55, 65) and which is rotatably mounted about the axis (G) in a bearing housing (53, 63) in a bearing arrangement between two outer bearing rings (93) that are axially supported at the bearing housing (53, 63),
wherein the outer bearing rings (93) each have, on their sides facing one another, a circumferential outer bearing face that is coaxial to the axis (G), said outer bearing face in each case lying opposite a bearing face (81) embodied on the end side at the gear wheel (7),
**characterized**
**in that** the adjustment drive (5, 6) is embodied according to at least one of Claims 1 to 6.

9. Method for setting a bearing arrangement of an adjustment drive (5, 6) for a steering column (1) that is adjustable by motor for a motor vehicle, comprising a threaded spindle (52, 62) with an axis (G), said threaded spindle engaging in a spindle nut (51, 61), and a gear wheel (7) which is connected to the spindle nut (51) or the threaded spindle (62) for rotation therewith and which is rotatably mounted about the axis (G) in a bearing housing (53, 63) in a bearing arrangement between two outer bearing rings (93) that are axially supported at the bearing housing (53, 63), wherein an outer bearing ring (93) is supported in an axially resilient manner at the bearing housing (53, 63) by way of an elastic preloading element (94, 95),
wherein the outer bearing rings (93) each have, on their sides facing one another, a circumferential outer bearing face that is coaxial to the axis (G), said outer bearing face in each case lying opposite a bearing face (81) embodied on the end side at the gear wheel (7),
comprising
A) applying an axial preloading force (F) to the preloading element (94, 95), **characterized by** the steps:
B) applying a load moment (M, K) to the gear wheel (7) and measuring the load moment (M, K),
C) measuring a bearing state variable (M, x) that is correlated with the load moment (M, K),
D) comparing the measured bearing state variable (M, x) with a predetermined state target value,
E) should the measured bearing state variable (M, x) deviate from the state target value: modifying the axial preloading force (F),
F) should the measured bearing state variable (M, x) attain the state target value: affixing the preloading element (9) in an axial preloading position at the bearing housing (63) and completing the setting process.

10. Method according to Claim 9, **characterized by** the steps of:
B1) applying a breakaway torque (M) as load moment for rotational driving of the gear wheel (7) and measuring the breakaway torque (M) in the process as a correlating bearing state variable,
C1) comparing the measured breakaway torque (M) as a bearing state variable with a predetermined torque target value as a state target value,
E1) should the measured breakaway torque (M) as a bearing state variable be smaller than the predetermined torque target value as a state target value: increasing the axial preloading force (F),
F1) should the breakaway torque (M) as a bearing state variable attain the predetermined torque target value as a state target value: affixing the preloading element (9) in an axial preloading position at the bearing housing (63) and completing the setting process.

11. Method according to Claim 9 or 10, **characterized by** the steps of:
B2) applying a tilting moment (K) as a load moment across the axis (G) on the gear wheel (7) and measuring a displacement (x) of the gear wheel (7) relative to the bearing housing (63) in the process as a correlating bearing state variable,
C2) comparing the measured displacement (x) as a bearing state variable with a predetermined stiffness threshold as a state target value,
E2) should the measured displacement (x) as a bearing state variable be greater than the predetermined stiffness threshold as a state target value: increasing the axial preloading force (F),
F2) should the measured displacement (x) as a bearing state variable attain the predetermined stiffness threshold as a state target value: affixing the preloading element (9) in an axial preloading position at the bearing housing and completing the setting process.

12. Method according to any one of Claims 9 to 11, **characterized in that** the preloading force (F) is measured when the preloading force (F) is applied.

13. Method according to any one of Claims 9 to 12, **characterized in that** the preloading force (F) is exerted on a securing element (95) that is arranged in front of an outer bearing ring (93).

14. Method according to Claim 13, **characterized in that** the securing element (95) is movable relative to the bearing housing (63) in the direction of the preloading force (F) and embodied to affix itself at the bearing housing (93) against the preloading force (F).

15. Method for setting a bearing arrangement of an adjustment drive (5, 6) for a steering column (1) that is adjustable by motor for a motor vehicle, comprising a threaded spindle (52, 62) with an axis (G), said threaded spindle engaging in a spindle nut (51, 61), and a gear wheel (7) which is connected to the spindle nut (51) or the threaded spindle (62) for rotation therewith and which is rotatably mounted about the axis (G) in a bearing housing (53, 63) in a bearing arrangement between two outer bearing rings (93) that are axially supported at the bearing housing (53, 63), wherein an outer bearing ring (93) is supported in an axially resilient manner at the bearing housing (53, 63) by way of an elastic preloading element (94, 95),
wherein the outer bearing rings (93) each have, on their sides facing one another, a circumferential outer bearing face that is coaxial to the axis (G), said outer bearing face in each case lying opposite a bearing face (81) embodied on the end side at the gear wheel (7),
comprising
A) applying an axial preloading force (F) to the preloading element (94, 95), **characterized by** the steps:
B) measuring the axial preloading force (F),
D) comparing the measured preloading force (F) with a predetermined target preloading force,
E) should the measured preloading force (F) deviate from the predetermined target preloading force: modifying the axial preloading force (F),
F) should the measured preloading force (F) attain the predetermined target preloading force: affixing the preloading element (9) in an axial preloading position at the bearing housing (63) and completing the setting process.

## Revendications

1. Entraînement de réglage (5, 6) pour une colonne de direction (1) à réglage motorisé pour un véhicule automobile, comportant une broche filetée (52, 62) venant en prise dans un écrou de broche (51, 61) et dotée d'un axe (G), une unité d'entraînement (55, 65) et une roue d'engrenage (7) pouvant être entraînée en rotation autour de l'axe (G) par l'unité d'entraînement (55, 65), reliée de manière solidaire en rotation à l'écrou de broche (51) ou à la broche filetée (62), laquelle roue d'engrenage est montée rotative autour de l'axe (G) dans un boîtier de palier (53, 63) dans un ensemble palier entre deux bagues extérieures de palier (93) supportées axialement sur le boîtier de palier (53, 63),
les bagues extérieures de palier (93) présentant sur leurs côtés en regard l'un de l'autre respectivement une surface extérieure de palier périphérique coaxialement à l'axe (G), laquelle est respectivement en regard d'une surface de palier (81) réalisée du côté frontal sur la route d'engrenage (7),
au moins une bague extérieure de palier (93) étant supportée de manière axialement élastique sur le boîtier de palier (53, 63) par le biais d'un élément de précontrainte (94, 95) élastique, lequel exerce une force de précontrainte (F) serrant les deux bagues extérieures de palier (93) axialement l'une contre l'autre, **caractérisé en ce que**
l'élément de précontrainte est réalisé sous forme d'élément d'assujettissement (95) d'une seule pièce.

2. Entraînement de réglage (5, 6) selon la revendication 1, **caractérisé en ce que** l'élément de précontrainte (94) réalisé sous forme d'élément d'assujettissement (95) d'une seule pièce comprend un élément ressort annulaire.

3. Entraînement de réglage (5, 6) selon l'une des revendications précédentes, **caractérisé en ce que** l'élément de précontrainte (94) réalisé sous forme d'élément d'assujettissement (95) d'une seule pièce est supporté sur l'élément d'assujettissement (95) relié au boîtier de palier (63).

4. Entraînement de réglage (5, 6) selon l'une des revendications précédentes, **caractérisé en ce que** des corps de roulement (91) sont disposés entre la roue d'engrenage (7) et les bagues extérieures de palier (93).

5. Entraînement de réglage (5, 6) selon l'une des revendications précédentes, **caractérisé en ce qu'**une bague extérieure de palier (93) est supportée rigidement axialement sur le boîtier de palier (53, 63) au niveau d'une butée (97).

6. Entraînement de réglage (5, 6) selon l'une des revendications précédentes, **caractérisé en ce que** le boîtier de palier (63) présente un espace de logement cylindrique creux, dans lequel les bagues extérieures de palier (93) et la roue d'engrenage (7) sont disposées coaxialement à l'axe (G).

7. Entraînement de réglage (5, 6) selon la revendication 6, **caractérisé en ce que** l'élément d'assujettissement (95) présente des moyens de fixation (951) pour la fixation à l'intérieur de l'espace de logement.

8. Colonne de direction (1) à réglage motorisé pour un véhicule automobile, comportant une unité porteuse (2) qui peut être mise en place sur une carrosserie de véhicule, et par laquelle une unité de réglage (3) est retenue, dans laquelle un arbre de direction (32) est monté rotatif autour d'un axe longitudinal (L), et comportant un entraînement de réglage (5, 6) qui est relié à l'unité porteuse (2) et à l'unité de réglage (3), et par lequel l'unité de réglage (3) peut être réglée par rapport à l'unité porteuse (2), l'entraînement de réglage (5, 6) comportant une broche filetée (52, 62) venant en prise dans un écrou de broche (51) et dotée d'un axe (G), une unité d'entraînement (55, 65) et une roue d'engrenage (7) pouvant être entraînée en rotation autour de l'axe (G) par l'unité d'entraînement (55, 65), reliée de manière solidaire en rotation à l'écrou de broche (51) ou à la broche filetée (62), laquelle roue d'engrenage est montée rotative autour de l'axe (G) dans un boîtier de palier (53, 63) dans un ensemble palier entre deux bagues extérieures de palier (93) supportées axialement sur le boîtier de palier (53, 63),
les bagues extérieures de palier (93) présentant sur leurs côtés en regard l'un de l'autre respectivement une surface extérieure de palier périphérique coaxialement à l'axe (G), laquelle est respectivement en regard d'une surface de palier (81) réalisée du côté frontal sur la route d'engrenage (7),
**caractérisée en ce que**
l'entraînement de réglage (5, 6) est réalisé selon au moins l'une des revendications 1 à 6.

9. Procédé de réglage d'un ensemble palier d'un entraînement de réglage (5, 6) pour une colonne de direction (1) à réglage motorisé pour un véhicule automobile, comportant une broche filetée (52, 62) venant en prise dans un écrou de broche (51, 61) et dotée d'un axe (G), et une roue d'engrenage (7) reliée de manière solidaire en rotation à l'écrou de broche (51) ou à la broche filetée (62), laquelle roue d'engrenage est montée rotative autour de l'axe (G) dans un boîtier de palier (53, 63) dans un ensemble palier entre deux bagues extérieures de palier (93) supportées axialement sur le boîtier de palier (53, 63), une bague extérieure de palier (93) étant supportée de manière axialement élastique sur le boîtier de palier (53, 63) par le biais d'un élément de précontrainte (94, 95) élastique, les bagues extérieures de palier (93) présentant sur leurs côtés en regard l'un de l'autre respectivement une surface extérieure de palier périphérique coaxialement à l'axe (G), laquelle est respectivement en regard d'une surface de palier (81) réalisée du côté frontal sur la route d'engrenage (7), comprenant
A) l'application d'une force de précontrainte axiale (F) sur l'élément de précontrainte (94, 95), **caractérisé par** les étapes suivantes :
B) l'application d'un couple de sollicitation (M, K) sur la roue d'engrenage (7) et la mesure du couple de sollicitation (M, K),
C) la mesure d'une grandeur d'état de palier (M, x) corrélée avec le couple de sollicitation (M, K),
D) la comparaison de la grandeur d'état de palier mesurée (M, x) avec une valeur cible d'état prédéfinie,
E) lorsque la grandeur d'état de palier mesurée (M, x) diffère de la valeur cible d'état : modification de la force de précontrainte axiale (F),
F) lorsque la grandeur d'état de palier mesurée (M, x) atteint la valeur cible d'état : fixation de l'élément de précontrainte (9) dans la position de précontrainte axiale sur le boîtier de palier (63) et fin du réglage.

10. Procédé selon la revendication 9,
**caractérisé par** les étapes suivantes :
B1) application d'un couple de patinage (M) en tant que couple de sollicitation pour l'entraînement en rotation de la roue d'engrenage (7) et en l'occurrence mesure du couple de patinage (M) en tant que grandeur d'état de palier de corrélation,
C1) comparaison du couple de patinage mesuré (M) en tant que grandeur d'état de palier avec une valeur cible de couple prédéfinie en tant que valeur cible d'état,
E1) lorsque le couple de patinage mesuré (M) en tant que grandeur d'état de palier est inférieur à la valeur cible de couple prédéfinie en tant que valeur cible d'état : augmentation de la force de précontrainte axiale (F),
F1) lorsque le couple de patinage (M) en tant que grandeur d'état de palier atteint la valeur cible de couple prédéfinie en tant que valeur cible d'état : fixation de l'élément de précontrainte (9) dans la position de précontrainte axiale sur le boîtier de palier (63) et fin du réglage.

11. Procédé selon la revendication 9 ou 10, **caractérisé par** les étapes suivantes :
B2) application d'un couple de renversement (M) en tant que couple de sollicitation sur la roue d'engrenage (7) transversalement à l'axe (G) et en l'occurrence mesure d'un décalage (x) de la roue d'engrenage (7) par rapport aux boîtiers de palier (63) en tant que grandeur d'état de palier de corrélation,
C2) comparaison du décalage mesuré (x) en tant que grandeur d'état de palier avec une valeur limite de rigidité prédéfinie en tant que valeur cible d'état,
E2) lorsque le décalage mesuré (x) en tant que grandeur d'état de palier est supérieur à la valeur limite de rigidité prédéfinie en tant que valeur cible d'état : augmentation de la force de précontrainte axiale (F),
F2) lorsque le décalage mesuré (x) en tant que grandeur d'état de palier atteint la valeur limite de rigidité prédéfinie en tant que valeur cible d'état : fixation de l'élément de précontrainte (9) dans la position de précontrainte axiale sur le boîtier de palier et fin du réglage.

12. Procédé selon l'une des revendications 9 à 11, **caractérisé en ce que** lors de l'application de la force de précontrainte (F) une mesure de la force de précontrainte (F) a lieu.

13. Procédé selon l'une des revendications 9 à 12, **caractérisé en ce que** la force de précontrainte (F) est exercée sur un élément d'assujettissement (95) disposé devant une bague extérieure de palier (93).

14. Procédé selon la revendication 13,
**caractérisé en ce que** l'élément d'assujettissement (95) est déplaçable par rapport au boîtier de palier (63) dans le sens de la force de précontrainte (F), et est réalisé de manière auto-fixante sur le boîtier de palier (93) à l'encontre de la force de précontrainte (F).

15. Procédé de réglage d'un ensemble palier d'un entraînement de réglage (5, 6) pour une colonne de direction (1) à réglage motorisé pour un véhicule automobile, comportant une broche filetée (52, 62) venant en prise dans un écrou de broche (51, 61) et dotée d'un axe (G), et une roue d'engrenage (7) reliée de manière solidaire en rotation à l'écrou de broche (51) ou à la broche filetée (62), laquelle roue d'engrenage est montée rotative autour de l'axe (G) dans un boîtier de palier (53, 63) dans un ensemble palier entre deux bagues extérieures de palier (93) supportées axialement sur le boîtier de palier (53, 63), une bague extérieure de palier (93) étant supportée de manière axialement élastique sur le boîtier de palier (53, 63) par le biais d'un élément de précontrainte (94, 95) élastique, les bagues extérieures de palier (93) présentant sur leurs côtés en regard l'un de l'autre respectivement une surface extérieure de palier périphérique coaxialement à l'axe (G), laquelle est respectivement en regard d'une surface de palier (81) réalisée du côté frontal sur la route d'engrenage (7),
comprenant
A) l'application d'une force de précontrainte axiale (F) sur l'élément de précontrainte (94, 95), **caractérisé par** les étapes suivantes :
B) la mesure de la force de précontrainte axiale (F),
D) la comparaison de la force de précontrainte mesurée (F) avec une force de précontrainte cible prédéfinie,
E) lorsque la force de précontrainte mesurée (F) diffère de la force de précontrainte cible prédéfinie : modification de la force de précontrainte axiale (F),
F) lorsque la force de précontrainte mesurée (F) atteint la force de précontrainte cible prédéfinie : fixation de l'élément de précontrainte (9) dans la position de précontrainte axiale sur le boîtier de palier (63) et fin du réglage.
